# EUROPEAN PATENT APPLICATION

(11) **EP 3 952 379 A1**
(43) Date of publication of application: **09.02.2022**
(21) Application number: 20822233.1
(22) Date of filing: 12.06.2020
(51) Int. Cl.: H04W 12/06

(54) **AUTHENTICATION METHOD, DEVICE, AND SYSTEM**

(30) Priority: 14.06.2019 CN 201910518148
(71) Applicant: Huawei Technologies Co., Ltd., Longgang Shenzhen, Guangdong 518129 (CN)
(72) Inventor: WU, Rong, Shenzhen, Guangdong 518129 (CN); GINZBOORG, Philip, Shenzhen, Guangdong 518129 (CN); NIEMI, Valtteri, Shenzhen, Guangdong 518129 (CN)
(74) Representative: Gill Jennings & Every LLP
(86) International application number: PCT/CN2020/095772
(87) International publication number: WO 2020/249068

(57) **Abstract**

This application provides an authentication method, apparatus, and system, and relates to the field of network security technologies. The authentication method includes: UE sends a first request message to a first authentication node, where the first request message includes first indication information used to indicate whether the UE includes a universal subscriber identity module (USIM); the UE receives a third request message sent by the first authentication node, where the third request message includes a RAND and an AUTN in first authentication information, or a RAND and an AUTN in second authentication information, where the first authentication information is for the USIM included in the UE, and the second authentication information is for mobile equipment included in the UE when the UE does not include the USIM; and the UE determines a root key and a user response (RES) based on the third request message. According to the authentication method provided in the embodiment of this application, mobile equipment and a USIM or a UICC that are on a UE side may use different authentication manners, thereby implementing key isolation.

## Description

This application claims priority to Chinese Patent Application No. 201910518148.7, filed with the China National Intellectual Property Administration on June 14, 2019 and entitled "AUTHENTICATION METHOD, APPARATUS, AND SYSTEM", which is incorporated herein by reference in its entirety.

### TECHNICAL FIELD

This application relates to the field of network security technologies, and more specifically, to an authentication method, apparatus, and system.

### BACKGROUND

As network technologies develop rapidly, network security becomes an increasingly prominent issue. In an existing internet of things security framework, a security tunnel between user equipment (user equipment, UE) and a network application function (network application function, NAF) may be established by using a generic bootstrapping architecture (generic bootstrapping architecture, GBA) technology. The GBA technology includes GBA authentication and authentication and key agreement (authentication and key agreement, AKA) authentication. In addition, as 5^{th} generation (5^{th} generation, 5G) mobile communication develops, currently, the security tunnel between the UE and the NAF may also be established by using a 5G network, that is, a technology for implementing secure communication between the UE and a third-party application server is implemented by using the 5G network.

Currently, for UE including mobile equipment (mobile equipment, ME) and a universal subscriber identity module (universal subscriber identity module, USIM), authentication between the UE and a network side needs to be jointly completed by using the ME and the USIM. However, in some cases, for example, for a service of a third-party network element that supports an authentication and key management for application (authentication and key management for application, AKMA) capability provided for the service, USIM authentication or a special form of subscriber identity module (subscriber identity module, SIM) authentication may not need to be used on a UE side. In this case, a card and mobile equipment that are on the UE side may have different authentication manners.

Therefore, for an AKMA service, when the card and the mobile equipment that are on the UE side have different authentication manners, how to implement authentication on the UE side and the network side becomes an urgent problem to be resolved.

### SUMMARY

This application provides an authentication method, apparatus, and system, to resolve a problem that normal authentication cannot be implemented when mobile equipment and a USIM have different authentication manners.

According to a first aspect, an authentication method is provided, and includes: User equipment (UE) sends a first request message to a first authentication node, where the first request message includes first indication information, and the first indication information is used to indicate that the UE includes a universal subscriber identity module (USIM) or does not include the USIM; the UE receives a third request message sent by the first authentication node, where the third request message includes a random number (RAND) and an authentication token (AUTN) in first authentication information, or a RAND and an AUTN in second authentication information, where the first authentication information is authentication information for the USIM included in the UE, and the second authentication information is authentication information for mobile equipment included in the UE when the UE does not include the USIM; and the UE determines, based on the third request message, a root key and a user response (RES) of the USIM included in the UE or the mobile equipment included in the UE.

According to the authentication method provided in the embodiment of this application, a UE side indicates, to an authentication node on a network side, whether the UE carries the USIM or a UICC, so that the authentication node can generate corresponding authentication information for a case in which the UE includes or does not include the USIM. In this way, the UE and the network side generate a corresponding key according to a specific authentication manner.

With reference to the first aspect, in some implementations of the first aspect, that the UE determines, based on the third request message, a root key and a RES of the USIM included in the UE or the mobile equipment included in the UE includes: When the UE includes the USIM, the USIM determines the key and the RES based on the RAND in the first authentication information; or when the UE does not include the USIM, the mobile equipment determines the root key and the RES based on the RAND in the second authentication information.

With reference to the first aspect, in some implementations of the first aspect, the third request message further includes second indication information, and the second indication information is used to indicate that the authentication information included in the third request message is for the USIM or for the mobile equipment.

With reference to the first aspect, in some implementations of the first aspect, the method further includes:
The UE determines, based on the second indication information, that the authentication information included in the third request message is for the USIM or for the mobile equipment.

With reference to the first aspect, in some implementations of the first aspect, the method further includes: When the UE includes the USIM, the USIM verifies the AUTN in the first authentication information; or when the UE does not include the USIM, the mobile equipment verifies the AUTN in the second authentication information.

With reference to the first aspect, in some implementations of the first aspect, the first request message includes third indication information, and the third indication information is used to indicate an AKMA service.

With reference to the first aspect, in some implementations of the first aspect, the method further includes: The UE sends a second reply message to the first authentication node, where the second reply message includes the RES.

With reference to the first aspect, in some implementations of the first aspect, the method further includes: When the UE includes the USIM, the USIM sends the mobile equipment the RES determined by the USIM.

With reference to the first aspect, in some implementations of the first aspect, the method further includes: The UE receives fourth indication information and a key lifetime of a first AKMA key that are sent by the first authentication node, where the first AKMA key is a key generated by the first authentication node based on the first authentication information or the second authentication information, and the fourth indication information is used to indicate a key corresponding to the first AKMA key.

With reference to the first aspect, in some implementations of the first aspect, the fourth indication information is carried in an authentication success message.

With reference to the first aspect, in some implementations of the first aspect, the first request message includes an ID of an AKMA application function (AF) and/or an authentication token of the AKMA.

According to a second aspect, an authentication method is provided, and includes: A second authentication node receives a second request message sent by a first authentication node, where the second request message is used to request authentication information from the second authentication node, the second request message includes first indication information, and the first indication information is used to indicate that UE includes a USIM or does not include the USIM; the second authentication node determines first authentication information or second authentication information based on the first indication information, where the first authentication information is authentication information for the USIM included in the UE, and the second authentication information is authentication information for mobile equipment included in the UE when the UE does not include the USIM; and the second authentication node sends a first reply message to the first authentication node, where the first reply message includes the first authentication information or the second authentication information.

With reference to the second aspect, in some implementations of the second aspect, that the second authentication node determines first authentication information or second authentication information based on the first indication information includes: When the first indication information indicates that the UE includes the USIM, the second authentication node determines the first authentication information; or when the first indication information indicates that the UE does not include the USIM, the second authentication node determines the second authentication information.

With reference to the second aspect, in some implementations of the second aspect, the first reply message includes second indication information, and the second indication information is used to indicate that the authentication information sent by the second authentication node to the first authentication node is for the USIM or for the mobile equipment.

With reference to the second aspect, in some implementations of the second aspect, the method further includes: The second request message received by the second authentication node includes an ID of an AKMA AF and/or an authentication token of the AKMA; and the second authentication node determines, based on the ID of the AKMA AF and/or the authentication token of the AKMA, that an authentication architecture of the UE is an AKMA architecture.

According to a third aspect, an authentication method is provided, and includes: A first authentication node receives a first request message sent by UE, where the first request message includes first indication information, and the first indication information is used to indicate that the UE includes a USIM or does not include the USIM; the first authentication node sends a second request message to a second authentication node, where the second request message is used to request authentication information from the second authentication node, and the second request message includes the first indication information; the first authentication node receives a first reply message sent by the second authentication node, where the first reply message includes first authentication information or second authentication information, the first authentication information is authentication information for the USIM included in the UE, and the second authentication information is authentication information for mobile equipment included in the UE when the UE does not include the USIM; and the first authentication node sends a third request message to the UE, where the third request message includes a random number (RAND) and an authentication token (AUTN) in the first authentication information, or a RAND and an AUTN in the second authentication information.

With reference to the third aspect, in some implementations of the third aspect, the first reply message further includes second indication information, and the second indication information is used to indicate that the authentication information sent by the second authentication node to the first authentication node is for the USIM or for the mobile equipment.

With reference to the third aspect, in some implementations of the third aspect, the first request message further includes third indication information, and the third indication information is used to indicate an AKMA service.

With reference to the third aspect, in some implementations of the third aspect, the second request message further includes a name of a serving network in which the UE is currently located and/or the third indication information.

With reference to the third aspect, in some implementations of the third aspect, the method further includes: The first authentication node receives a second reply message sent by the UE, where the second reply message includes a RES; the first authentication node determines, based on the RES, that authentication on the UE succeeds, and generates a first AKMA key, where the first AKMA key is a key generated by the first authentication node based on the first authentication information or the second authentication information; and the first authentication node sends fourth indication information and a key lifetime of the first AKMA key to the UE, where the fourth indication information is used to indicate a key corresponding to the first AKMA key.

With reference to the third aspect, in some implementations of the third aspect, the fourth indication information and the key lifetime of the first AKMA key are carried in an authentication success message.

With reference to the third aspect, in some implementations of the third aspect, the second request message further includes an ID of an AKMA AF and/or an authentication token of the AKMA; and the second authentication node determines, based on the ID of the AKMA AF and/or the authentication token of the AKMA, that an authentication architecture of the UE is an AKMA architecture.

According to a fourth aspect, user equipment is provided, and includes a module configured to perform the method according to any implementation of the first aspect.

According to a fifth aspect, an authentication apparatus is provided, and includes a module configured to perform the method according to any implementation of the second aspect.

According to a sixth aspect, an authentication apparatus is provided, and includes a module configured to perform the method according to any implementation of the third aspect.

According to a seventh aspect, an authentication apparatus is provided, where the communication apparatus includes at least one processor and a communication interface, the communication interface is used by the communication apparatus to exchange information with another communication apparatus; and when program instructions are executed in the at least one processor, the communication apparatus is enabled to implement functions of the method according to any implementation of the first aspect to the third aspect on the UE, the first authentication node, or the second authentication node.

According to an eighth aspect, an authentication system is provided, and includes UE, a first authentication node, and a second authentication node, where
the UE is configured to perform the method according to any implementation of the first aspect, the first authentication node is configured to perform the method according to any implementation of the second aspect, and the second authentication node is configured to perform the method according to any implementation of the third aspect.

According to a ninth aspect, a computer program storage medium is provided, where the computer program storage medium has program instructions; and when the program instructions are directly or indirectly executed, functions of the method according to any implementation of the first aspect to the third aspect on the UE, the first authentication node, and the second authentication node are implemented.

According to a tenth aspect, a chip system is provided, where the chip system includes at least one processor; and when program instructions are executed in the at least one processor, functions of the method according to any implementation of the first aspect to the third aspect on the UE, the first authentication node, and the second authentication node are implemented.

According to the authentication method provided in the embodiment of this application, a UE side indicates, to an authentication node on a network side, whether the UE carries the USIM or the UICC, so that the authentication node can generate corresponding authentication information for a case in which the UE includes or does not include the USIM. In this way, the UE and the network side generate a corresponding key according to a specific authentication manner.

### BRIEF DESCRIPTION OF DRAWINGS

FIG. 1 is a schematic diagram of an existing GBA;
FIG. 2 is a schematic flowchart of a GBA-based authentication process;
FIG. 3 is a schematic diagram of a possible AKMA architecture;
FIG. 4 is a schematic flowchart of existing identity verification;
FIG. 5 is a schematic flowchart of an existing EAP-AKA' architecture-based authentication process;
FIG. 6 is a schematic diagram of a process of generating an authentication vector;
FIG. 7 is a schematic flowchart of an existing 5G AKA architecture-based authentication process;
FIG. 8 is a schematic flowchart of an authentication method according to an embodiment of this application;
FIG. 9 is a schematic flowchart of an authentication method according to an embodiment of this application;
FIG. 10 is a schematic flowchart of another authentication method according to an embodiment of this application;
FIG. 11 is a schematic flowchart of still another authentication method according to an embodiment of this application;
FIG. 12 is a schematic diagram of a structure of user equipment according to an embodiment of this application;
FIG. 13 is a schematic diagram of a structure of an authentication apparatus according to an embodiment of this application;
FIG. 14 is a schematic diagram of a structure of another authentication apparatus according to an embodiment of this application; and
FIG. 15 is a schematic diagram of a structure of still another authentication apparatus according to an embodiment of this application.

### DESCRIPTION OF EMBODIMENTS

The following describes technical solutions in this application with reference to the accompanying drawings.

The technical solutions of the embodiments of this application may be used in various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5^{th} generation (5^{th} generation, 5G) system, or a new radio (new radio, NR) system.

A terminal device in the embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (base transceiver station, BTS) in the global system for mobile communications (global system for mobile communications, GSM) system or the code division multiple access (code division multiple access, CDMA) system, or may be a NodeB (NodeB, NB) in the wideband code division multiple access (wideband code division multiple access, WCDMA) system, an evolved NodeB (evolved NodeB, eNB or eNodeB) in the LTE system, an evolved NodeB such as a 5G base station (gNB) or a next generation base station, for example, an ng-eNB, of a 4^{th} generation mobile communication technology (4^{th} generation mobile communication technology, 4G) base station, or a radio controller in a cloud radio access network (cloud radio access network, CRAN) scenario. The network device may alternatively be a relay station, an access point, a vehicle-mounted device, a wearable device, a network device in the future 5G network, a network device in the future evolved PLMN network, or the like. This is not limited in the embodiments of this application.

Currently, authentication between UE and an NAF may be GBA AKA authentication, or may be authentication that is between the UE and a third-party application server and that is implemented by using a 5G network. The following describes a currently used GBA technology and a technology for implementing secure communication between the UE and the third-party application server by using the 5G network.

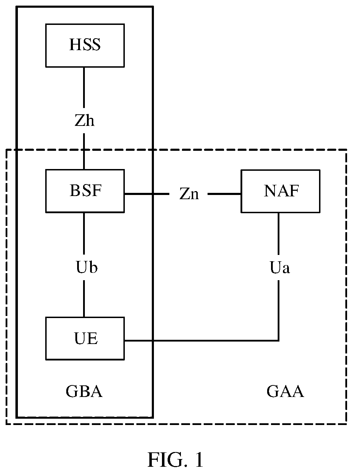

FIG. 1 is a schematic diagram of an existing GBA.

The GBA is a generic bootstrapping architecture for mobile communication. The GBA technology may be used to establish a security tunnel between UE and an NAF, and includes GBA authentication and AKA authentication. AKA is a GBA-based authentication mechanism. A main idea of using the AKA mechanism is to separate a function of a security server from an application server, and generate a key between the UE and a generic bootstrapping function interface of the security server by using the AKA authentication mechanism. Then, the application server obtains the key and user information from the security server, so that both an application end and a user end obtain the key.

Network elements in the GBA shown in FIG. 1 include: a bootstrapping server function (bootstrapping server function, BSF), the UE, the NAF, a home subscriber server (home subscriber server, HSS)/home location register (home location register, HLR), and a subscriber locator function (subscriber locator function, SLF). The BSF may serve as an intermediate hub, that is, may serve as an interface for interaction between the network elements. The HSS is a server that can provide information about the UE, and the HSS may store an authentication-related parameter of the UE.

In the GBA, the BSF may interact with the other network elements in the following ways: The BSF interacts with the UE through a Ub interface, to implement authentication between the UE and the BSF; the BSF obtains the authentication-related parameter of the UE from the HSS through a Zh interface; the BSF interacts with the NAF through a Zn interface; and the BSF interacts with the SLF through a Dz interface. In addition, in a scenario in which there are a plurality of HSSs, the BSF may further obtain a name of an HSS corresponding to the UE from the SLF. In addition, the UE may also interact with the NAF through a Ua interface. It should be understood that, because each application correspondingly has one NAF, the BSF and the UE may each interact with a plurality of NAFs.

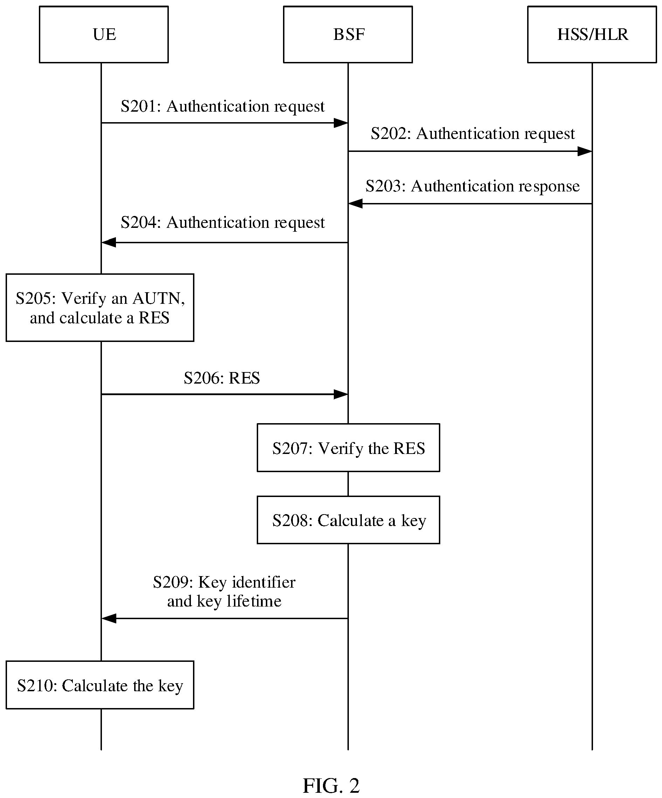

FIG. 2 is a schematic flowchart of a GBA-based authentication process.

Network elements in the defined GBA AKA authentication standard include UE, a BSF, and an HSS. A main process of GBA-based authentication may be as follows: Key agreement between the UE and the BSF is implemented based on a root key shared by the UE and the HSS, that is, the GBA-based authentication process mainly establishes a shared key between the BSF and the UE by performing a bootstrapping (bootstrapping) process. The UE and the BSF complete GBA AKA authentication based on an HTTP.

The following briefly describes steps included in the authentication process with reference to FIG. 2.

S201: The UE sends an authentication request to the BSF.

The UE may send an authentication request message to the BSF, where the authentication request message may include a UE identifier (identifier, ID).

S202: The BSF sends an authentication request to the HSS/an HLR.

It should be understood that subscriber home servers are classified into HSSs and HLRs. The HSS may be used in a 4G communication system, and the HLR may be used in a 3G communication system.

The UE may send the UE ID to the HSS/HLR. The HSS/HLR may determine a root key corresponding to the UE ID based on the UE ID, and obtain an authentication vector (authentication vector, AV) through calculation. Specifically, the AV may include a random number (RAND), an authentication token (authentication token, AUTN), a cipher key (cipher key, CK), an integrity key (integrity key, IK), and an expected user response (expected user response, XRES), that is, AV=(RAND, AUTN, CK, IK, XRES).

S203: The HSS/HLR sends an authentication response to the BSF.

The HSS/HLR may send the AV determined by the HSS/HLR in step S202 to the BSF.

S204: The BSF sends an authentication request to the UE.

After receiving the AV sent by the HSS/HLR, the BSF may send the UE the RAND and the AUTN that are included in the AV.

S205: The UE verifies the AUTN, and calculates a key and a RES.

After receiving the RAND and the AUTN that are sent by the BSF, the UE may verify the AUTN, and calculate the shared key and the user response (user response, RES). Specifically, the UE may calculate and obtain the CK and the IK, where the CK and the IK may be used to calculate the key of the UE.

S206: The UE sends the RES to the BSF.

S207: The BSF compares the XRES with the RES, to verify whether the RES is correct.

S208: The BSF calculates the key.

If the BSF verifies that the RES is correct in step S207, the BSF may calculate the key of the BSF, where the key Ks=CK||IK.

S209: The BSF sends a key identifier and a key lifetime to the UE.

The key identifier B-TID is generated by the BSF based on the RAND and a BSF server name (server name). B-TID may be base64encode(RAND)@BSF_servers_domain_name, where base64encode(RAND) may indicate that base64 encoding conversion is performed on the RAND.

S210: The UE calculates the key.

The UE calculates, based on the CK and the IK that are obtained through calculation, the key Ks=CK||IK corresponding to the key generated by the BSF.

In addition, currently, for an AKMA architecture, secure communication between the UE and a third-party application server may be implemented by using a 5G network. AKMA may be third-party service authentication and an operator's external service authentication. When authentication is performed between the UE and a third-party network element that supports an AKMA capability, USIM authentication, a special form of SIM authentication, or another form of authentication may not be required. In other words, for a service of the third-party network element that supports the AKMA capability, authentication may be performed on a UE side by using mobile equipment included in the UE, and authentication is not necessarily implemented by using a USIM or a universal integrated circuit card (universal integrated circuit card, UICC).

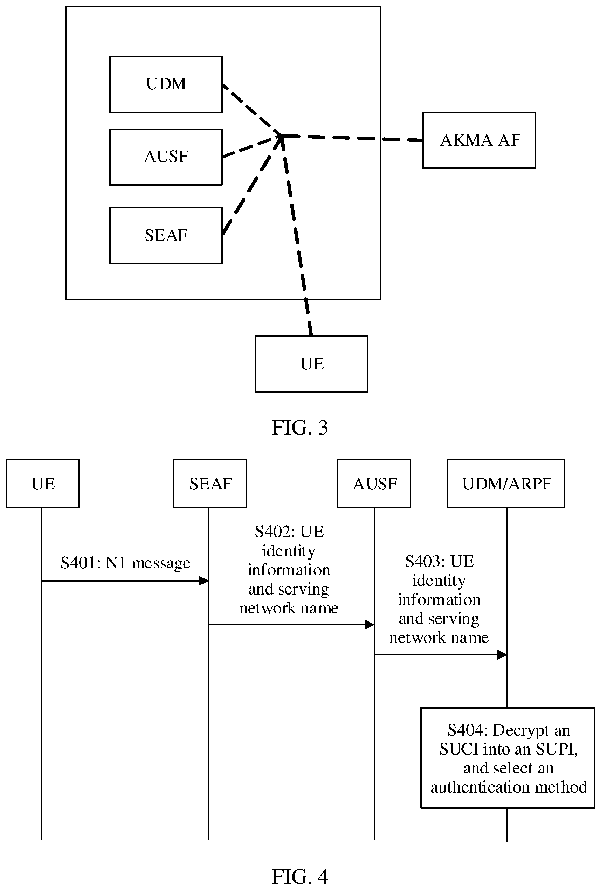

FIG. 3 is a schematic diagram of a possible AKMA architecture in 5G.

Network elements in the possible AKMA architecture mainly include: UE, a unified data management (unified data management, UDM) device, an authentication server function (authentication server function, AUSF), a security anchor function (security anchor function, SEAF), and an authentication credential repository and processing function (authentication credential repository and processing function, ARPF).

The UE in the architecture may include a terminal device such as a terminal device, a logical entity, an intelligent device (for example, a mobile phone), or an intelligent terminal, or may include an internet of things (internet of things, IoT) device such as a sensor, an electricity meter, or a water meter.

In addition, an AKMA application function (AKMA application function, AKMA AF) may be an application or a service that provides an AKMA service for connecting to a 3GPP core network. In other words, the AKMA AF may be understood as an application trusted by an operator. The AKMA AF may have interfaces with both the UE and an AKMA anchor (anchor), or may have a direct or indirect interface with a third-party service server.

It should be understood that a function of the AKMA anchor in the architecture is similar to that of a BSF in a GBA architecture, that is, the AKMA anchor may be a node configured to authenticate the UE and may have an interface with the AKMA AF. It should be understood that the logical functional entity may be deployed together with another authentication-related node of the core network, for example, the UDM, the AUSF, or the SEAF, or may be deployed separately.

The following briefly describes an authentication process that is based on the architecture shown in FIG. 3 with reference to the accompanying drawings.

FIG. 4 is a schematic flowchart of existing identity verification.

Network elements in the identity verification process include UE, an SEAF, an AUSF, and UDM or an ARPF. The identity verification process is as follows:

S401: The UE sends an N1 message to the SEAF.

The N1 message includes identity information of the UE, that is, a UE ID, for example, a subscription concealed identifier (subscription concealed identifier, SUCI) or a 5G globally unique temporary identity (globally unique temporary identity, GUTI). The SUCI is obtained after a subscription permanent identifier (subscription permanent identifier, SUPI) is encrypted, and the 5G-GUTI is allocated by the SEAF to the UE.

S402: The SEAF sends the identity information of the UE and a serving network name to the AUSF.

The SEAF may send an authentication request message to the AUSF. The authentication request message includes the identity information of the UE, for example, the SUCI or the SUPI. The authentication request message sent by the SEAF to the AUSF may be, for example, a Nausf_UEAuthentication_authenticate Request. In addition, the SEAF may further send the AUSF the name (serving network name, SN name) of the serving network accessed by the SEAF.

It should be understood that if the SEAF receives the 5G-GUTI of the UE in step S401, the SEAF may find, based on the 5G-GUTI, a corresponding SUPI stored by the SEAF, and send the corresponding SUPI to the AUSF. If the SEAF receives the SUCI in step S401, the SEAF may send the SUCI to the AUSF. In addition, the SN name is the name of the network accessed by the SEAF. In other words, because the SEAF is in a visited network, a name of the visited network needs to be sent to the AUSF.

S403: The AUSF sends the received SUCI or SUPI and the received SN name to the UDM/ARPF.

S404: When the AUSF sends the SUCI to the UDM, the UDM may decrypt the SUCI into the SUPI by using a subscription identifier de-concealing function (subscription identifier de-concealing function, SIDF) in the UDM. After learning of the SUPI, the UDM or the ARPF may select an authentication method based on subscription information. In addition, the SUCI or SUPI and the SN name that are sent by the AUSF to the UDM/ARPF may be carried in an authentication request message sent by the AUSF to the UDM/ARPF, where the authentication request message may be, for example, a Nudm_UEAuthentication_Get Request.

After verifying the UE identity, the UDM/ARPF may perform a UE authentication process.

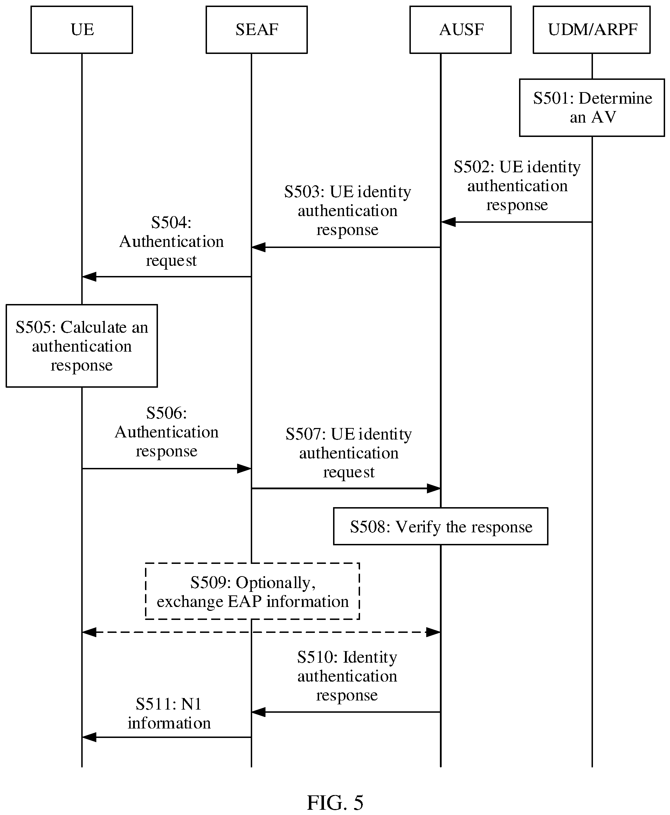

The following describes two authentication methods with reference to FIG. 5 to FIG. 7.

FIG. 5 is a schematic flowchart of an existing EAP-AKA' architecture-based authentication process.

The authentication process shown in FIG. 5 is an authentication process based on extensible authentication protocol (extensible authentication protocol, EAP) AKA'. The authentication process includes the following content.

S501: UDM/An ARPF determines an authentication vector (AV).

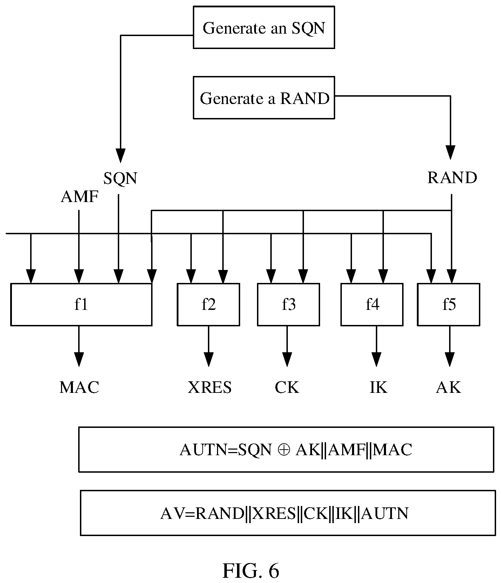

After receiving a UE ID and an SN name that are sent by an AUSF, the UDM/ARPF determines the AV based on the received information. 5-tuple included in the AV may be a RAND, an AUTN, an XRES, a CK, and an IK. A process of generating the AV parameter is shown in FIG. 6. For a specific procedure, refer to an existing procedure, and details are not described herein.

Then, the UDM/ARPF updates the AV based on the SN name and according to a KDF algorithm. Specifically, the UDM/ARPF calculates a CK' and an IK' based on the SN name and according to the KDF algorithm, and replaces the CK and the IK that are in the original AV with the CK' and the IK'.

S502: The UDM/ARPF sends a UE identity authentication response to the AUSF.

The UE identity authentication response sent by the UDM/ARPF to the AUSF may be a Nudm_UEAuthentication_Get Response, and the UE identity authentication response may include an updated authentication vector (denoted as an AV'). Parameters that are used for authentication and that are included in the AV' may be the RAND, the AUTN, the XRES, the CK', and the IK'.

S503: The AUTN sends a UE identity authentication response to an SEAF.

The UE identity authentication response sent by the AUTN to the SEAF may be an EAP-request (EAP-request) message or an AKA'-challenge (AKA'-challenge) message. The EAP-request message or the AKA'-challenge message includes the RAND and the AUTN.

S504: The SEAF sends an authentication request to UE.

The authentication request (authentication request) sent by the SEAF to the UE may be the forwarded EAP-request message or AKA'-challenge message received in step S503. The EAP-request message or the AKA'-challenge message includes the RAND and the AUTN.

Specifically, the SEAF forwards the EAP-request message or the AKA'-challenge message to a USIM included in the UE.

S505: The UE calculates an authentication response.

Specifically, after receiving the RAND and the AUTN that are in the EAP-request message or the AKA'-challenge message, the USIM in the UE verifies whether the AUTN is correct. If the AUTN is correct, the USIM calculates a reply RES, the CK, and the IK, and then sends the RES, the CK, and the IK to mobile equipment (ME) included in the UE. The ME then calculates the CK' and the IK' based on the SN name and according to the KDF algorithm. The CK' and the IK' may be used by the UE to generate a key corresponding to an AUSF key.

S506: The UE sends an authentication response to the SEAF.

The authentication response sent by the UE to the SEAF may be an EAP-response (EAP-response) message or the AKA'-challenge (AKA'-challenge) message. The EAP-response message and the AKA'-challenge message include the RES.

S507: The SEAF forwards the message received in step S506 to the AUSF.

S508: The AUSF verifies the response.

The AUSF may compare whether the RES is equal to a RES stored by the AUSF. If the RES is equal to the RES stored by the AUSF, the AUSF successfully verifies the UE.

Optionally, the AUSF and the UE may further exchange an EAP-request/AKA'-notification (AKA'-notification) message and an EAP-response/AKA'-notification message in step S509.

S510: The AUSF sends a UE identity authentication response to the SEAF.

The AUSF may derive an extended master session key (extended master session key, EMSK) from the CK' and the IK' and use the first 256 bits (bits) of the EMSK as the AUSF key (denoted as K_{AUSF}), then derive an SEAF key K_{SEAF} based on K_{AUSF}, and send an EAP success (EAP success) message and K_{SEAF} to the SEAF.

S511: The SEAF sends an N1 message to the UE.

The N1 message may be the EAP success message.

It can be learned from the foregoing EAP-AKA' authentication process that, in the authentication process, a key on a UE side needs to be generated jointly by the USIM and the ME that are included in the UE.

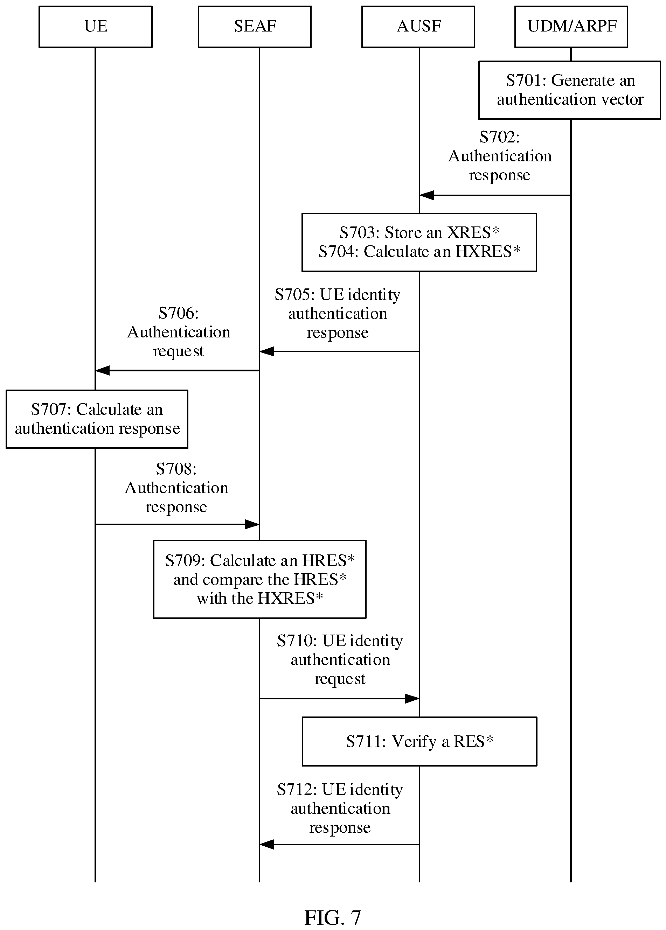

FIG. 7 is a schematic flowchart of an existing 5G AKA architecture-based authentication process.

S701: UDM/An ARPF generates an authentication vector.

After receiving a UE ID and an SN name that are sent by an AUSF, the UDM/ARPF determines a 5G home environment authentication vector (home environment authentication vector, HE AV) based on the received information. Specifically, the UDM/ARPF calculates an AUSF key K_{AUSF} based on a CK, an IK, and the SN name and according to a KDF algorithm, and calculates an XRES^{∗} based on a RES, a RAND, and the SN name. Finally, parameters included in the 5G HE AV determined by the UDM/ARPF are the RAND, the AUTN, the XRES^{∗}, and K_{AUSF}.

S702: The UDM/ARPF sends an authentication response to the AUSF.

The authentication response may be a Nudm_Authentication_Get Response. By sending the response message to the AUSF, the UDM/ARPF sends the 5G HE AV and the UE ID such as an SUPI to the AUSF.

S703: The AUSF stores the XRES^{∗} in the 5G HE AV.

S704: The AUSF calculates a hash (hash) value HXRES^{∗} of the XRES^{∗}, calculates K_{SEAF} based on K_{AUSF} in the 5G HE AV, and then correspondingly replaces the XRES^{∗} and K_{AUSF} that are in the 5G HE AV with the HXRES^{∗} and K_{SEAF}, to be specific, replaces the XRES^{∗} in the 5G HE AV with the HXRES^{∗} and replaces K_{AUSF} in the 5G HE AV with K_{SEAF}, to obtain a 5G AV including the RAND, the AUTN, the HXRES^{∗}, and K_{SEAF}.

S705: The AUSF sends a UE identity authentication response to an SEAF.

The UE identity authentication response may be a Nausf_UEAuthentication_Authenticate Response, and the identity authentication response includes the 5G AV.

S706: The SEAF sends an authentication request to UE.

The authentication request includes a RAND and an AUTN that are sent by the SEAF to the UE, and the RAND and the AUTN are the RAND and the AUTN that are included in the 5G HV. Specifically, the SEAF sends the RAND and the AUTN to a USIM included in the UE.

S707: The UE calculates an authentication response.

Specifically, after the UE receives the RAND and the AUTN that are sent by the SEAF, the USIM included in the UE verifies whether the AUTN is correct. If the AUTN is correct, the USIM calculates the reply RES, the CK, and the IK, and sends the RES, the CK, and the IK to ME included in the UE. Then, the ME calculates the AUSF key K_{AUSF} based on the CK and the IK, and calculates a RES^{∗} based on the RES.

It can be learned that a process in which the UE calculates the AUSF key and the RES^{∗} needs to be jointly completed by the USIM and the ME that are included in the UE.

S708: The UE sends an authentication response (authentication response) to the SEAF, that is, sends the SEAF the RES^{∗} generated by the UE.

S709: The SEAF calculates an HRES^{∗}, and compares the HRES^{∗} with the HXRES^{∗}.

Specifically, after receiving the RES^{∗} sent by the UE, the SEAF calculates the HRES^{∗} based on the RES^{∗}, and compares the calculated HRES^{∗} with the HXRES^{∗} stored in step S705, to determine whether the HRES^{∗} is consistent with the HXRES^{∗}. If the HRES^{∗} is consistent with the HXRES^{∗}, it indicates that the SEAF successfully verifies the UE.

S710: The SEAF sends a UE identity authentication request to the AUSF.

The UE identity authentication request sent by the SEAF to the AUSF may be a Nausf_UEAuthentication_Authenticate request. In other words, the SEAF sends the AUSF the RES^{∗} determined by the UE.

S711: The AUSF verifies the RES^{∗}.

Specifically, after receiving the RES^{∗}, the AUSF compares whether the RES^{∗} is consistent with the XRES^{∗} stored by the AUSF. If the RES^{∗} is consistent with the XRES^{∗}, it indicates that the AUSF successfully verifies the UE.

S712: The AUSF sends a UE identity authentication response to the SEAF.

After verifying the RES^{∗}, the AUSF notifies the SEAF of a result indicating whether authentication on the UE succeeds.

It can be learned from the foregoing EAP-AKA' authentication process and 5G AKA authentication process that a key generation process on a UE side needs to be completed jointly by the USIM and the ME that are included in the UE. However, in some cases, for example, for a service of a third-party network element that supports an AKMA capability, USIM authentication, a specific form of SIM authentication, or another form of authentication may not need to be used on the UE side, that is, only authentication on the ME included in the UE side may need to be performed. In this case, the USIM and the ME that are included in the UE side may have different authentication manners. As a result, protection keys on the USIM and the ME are different. For UE that includes or does not include a USIM, an embodiment of this application provides an authentication manner, to implement authentication independently performed on a UICC and ME on the UE side, and achieve an effect of key isolation.

For ease of understanding, the UE in this embodiment of this application may be a combination of the ME and the USIM, that is, the UE may include the ME and the USIM. The ME may be a carrier of the USIM, that is, mobile equipment. The USIM is a global subscriber identity module, and the USIM may include information such as an international mobile subscriber identity (international mobile subscriber identity, IMSI), an SUPI, and a public key (public key). In addition, the authentication method provided in this embodiment of this application may be further applicable to a case in which UE includes or does not include a UICC in an AKMA service, that is, the USIM in the authentication method provided in this embodiment of this application may alternatively be the UICC.

The main difference between the USIM and the UICC is that the UICC may be a mobile smart card that includes a plurality of logical applications, for example, a subscriber identity module (SIM), a universal subscriber identity module (USIM), an IP multimedia service identity module (IP multimedia service identity module, ISIM), and another application (such as a digital wallet). The UICC is used to store information such as user information, an authentication key, a personal address book, and an SMS message. The USIM, one of constructions of a network, is a global subscriber identity card, and may be an application on the UICC.

A scenario to which the authentication method provided in this embodiment of this application is applicable may be: In a process of accessing a third-party application, an authentication method between the UE and an authentication node of an operator, the operator, or a third-party application server is improved. The authentication method provided in this embodiment of this application is applicable to the AKMA service, or an authentication architecture of the authentication method may be an AKMA structure. In this scenario, because the UE side may not need the USIM/UICC, the USIM/UICC and the ME may have different authentication manners.

For the foregoing scenario, an embodiment of this application provides an authentication method. The following describes the authentication method provided in this embodiment of this application with reference to the accompanying drawings.

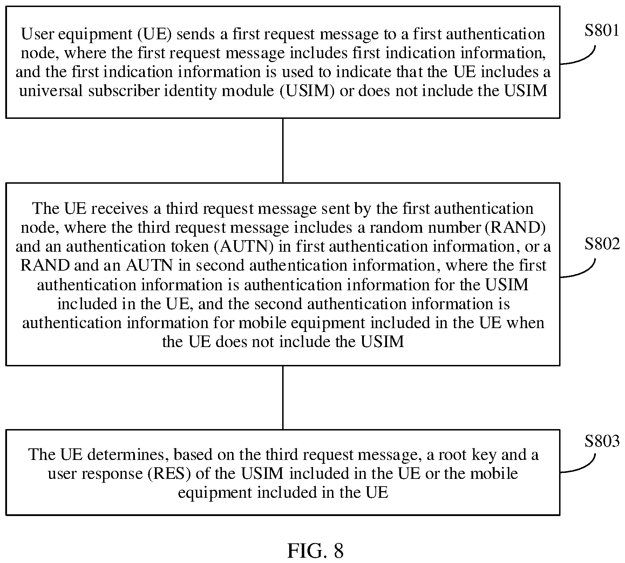

FIG. 8 is a schematic flowchart of an authentication method according to an embodiment of this application. The authentication method may be performed by UE. Specifically, the authentication method may be performed by a USIM, a UICC, or ME included in the UE.

S801: The UE sends a first request message to a first authentication node, where the first request message includes first indication information, and the first indication information is used to indicate that the UE includes or does not include the USIM.

Optionally, in a process of accessing a third-party application server, authentication between the UE and the first authentication node on a network side may be performed, where the third-party application server supports an AKMA capability, that is, the UE side may not carry the USIM/UICC. The first authentication node may be an authentication node of an operator. The first authentication node may be, for example, an AUSF or an AKMA authentication function (AKMA authentication function, AAuF). When the first authentication node is the AAuF, the first authentication node and the AUSF may be deployed together or deployed separately.

The first request message sent by the UE to the first authentication node includes the first indication information, and the first indication information may be used to indicate that the UE includes the USIM or does not include the USIM. Alternatively, the first indication information may be used to indicate that the UE includes the UICC or does not include the UICC.

For example, a character string used by the first indication information to indicate that the UE includes or does not include the USIM may be "USIM_Status". When the status is "1", it indicates that the UE includes the USIM; or when the character string is default, it indicates that the UE does not include the USIM. It should be understood that, when the first indication information is used to indicate whether the UE includes the UICC, a character string similar to that used to indicate whether the UE includes the USIM may also be used. It should be further understood that specific content of the character string used by the first indication information in this embodiment to indicate whether the UE includes the USIM or the UICC is merely used as an example for description, but is not limited.

Optionally, the UE sends a UE ID to the first authentication node, where the UE ID may be included in the first request message. The UE ID may be one or more of an IMSI, a permanent equipment identifier (permanent equipment identifier, PEI), an SUPI, an SUCI, a temporary mobile subscriber identity (temporary mobile subscriber identity, TMSI), an IP multimedia public identity (IP multimedia public identity, IMPU), a medium access control (medium access control, MAC) address, an internet protocol address (internet protocol address, IP), a mobile phone number, and a GUTI. Specific content of the UE ID is not limited in this application, and is uniformly represented by using the UE ID below.

Optionally, the UE sends third indication information to the first authentication node, where the third indication information is used to indicate an AKMA service. The third indication information may be carried in the first request message. The third indication information may be carried in the first request message. In addition, a character string "AKMA" may be used to indicate the AKMA service; some specific values, for example, "1", may represent the AKMA service; or a specific value of a bit may be used to correspond to the AKMA service. Specific indication content of the AKMA service is not limited herein.

S802: The UE receives a third request message sent by the first authentication node.

The third request message may include a RAND and an AUTN in first authentication information, or a RAND and an AUTN in second authentication information, where the first authentication information may be authentication information for the USIM or the UICC included in the UE, and the second authentication information may be authentication information for the ME included in the UE when the UE does not include the USIM or the UICC.

Optionally, the UE receives second indication information sent by the first authentication node, where the second indication information is used to indicate whether the authentication information sent by the first authentication node to the UE is the authentication information for the USIM (or the UICC) or the authentication information for the ME. The second indication information may be carried in the third request message.

Optionally, the first authentication node sends an authentication request to the UE by using a non-access stratum (non-access stratum, NAS) message, and includes the RAND and the AUTN in the NAS message.

S803: The UE determines a root key and a RES based on the third request message.

Optionally, after receiving the third request message sent by the first authentication node in step S802, the UE may determine whether to support the authentication. For example, the USIM or the ME of the UE determines, based on whether the USIM or the ME can process the received RAND and AUTN, whether to support the authentication. Alternatively, the UE may determine, based on the second indication information included in the third request message, whether to support the authentication. Further, the UE may determine, based on the second indication information, whether the obtained RAND and AUTN are for the USIM (or the UICC) or for the ME.

In an example, if the UE determines that the RAND and the AUTN are for the USIM or the UICC, that is, the UE receives the RAND and the AUTN that are in the first authentication information, the ME may send the RAND and the AUTN to the UICC or the USIM. The UICC or the USIM may determine freshness of the authentication information based on the AUTN, calculate a root key (denoted as Kakma) of AKMA based on the RAND, and generate a RES. The root key Kakma may be a key that is generated by the UE in the authentication process and that corresponds to a key of the first authentication node, and Kakma herein specifically refers to a root key in an AKMA framework. In addition, the UICC or the USIM may further send the generated RES to the ME, so that the ME can subsequently send the RES to an authentication node to perform a subsequent authentication process.

In another example, when the UE does not include the USIM or the UICC, the RAND and the AUTN that are received by the UE may be the authentication information for the ME, that is, the UE receives the RAND and the AUTN that are in the second authentication information. In this case, the ME verifies freshness of the authentication information based on the AUTN, to determine that the key is valid in a current time period, then calculates a root key (Kakma) of AKMA based on the RAND, and generates a RES.

Optionally, when the UE determines to support the current authentication manner, the UE may subsequently send the generated RES to the first authentication node, so that the first authentication node performs further authentication. Specifically, when the current authentication is performed on the USIM or the UICC, the UISM or the UICC may send the generated RES to the ME, and then the ME sends the RES to the first authentication node. Alternatively, when the current authentication is performed on the ME, the ME generates a RES, and sends the RES to the first authentication node.

Optionally, when the UE determines not to support the authentication, that is, the USIM (or the UICC) and the ME that are included in the UE determine, based on an identifier of the authentication information or processing capabilities of the USIM (or the UICC) and the ME, not to support the current authentication manner, the UE may subsequently reply a failure message or a rejection message to an authentication node or a network. Alternatively, if the UE feeds back an error on the current authentication manner, the UE may subsequently reply a failure message or a rejection message to an authentication node or a network.

The following specifically describes the authentication method provided in this embodiment of this application with reference to the accompanying drawings.

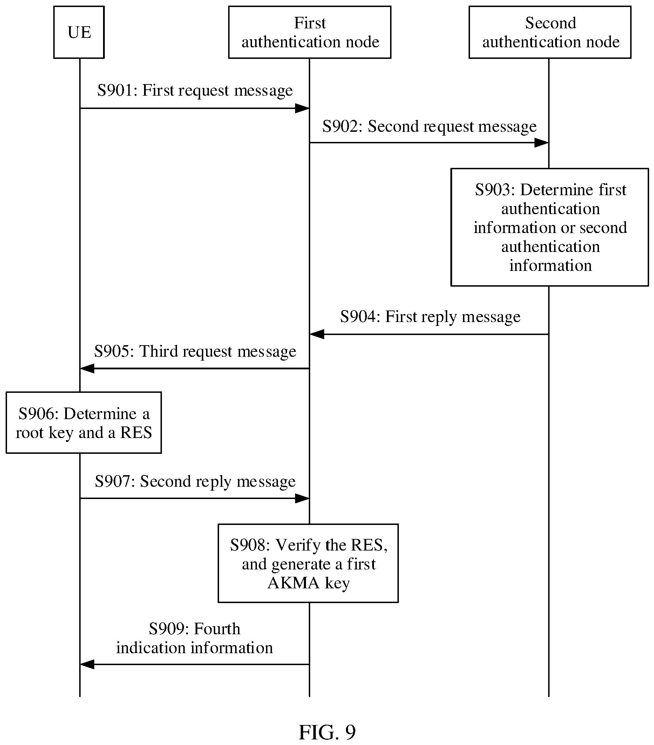

FIG. 9 is a schematic flowchart of an authentication method according to an embodiment of this application.

S901: UE sends a first request message to a first authentication node.

The UE may include a USIM or a UICC, or may not include the USIM or the UICC. It should be understood that, when the UE includes the USIM or the UICC, authentication may be performed on the USIM or the UICC and a key is generated. When the UE does not include the USIM or the UICC, authentication may be performed on ME included in the UE and a key is generated. The first authentication node may be an authentication node of an operator. The first authentication node may be, for example, an AUSF or an AKMA authentication function (AKMA authentication function, AAuF). When the first authentication node is the AAuF, the first authentication node and the AUSF may be deployed together or deployed separately.

Specifically, the first request message may be used to trigger authentication on the UE by a network side. The first request message may include first indication information, and the first indication information is used to indicate that the UE includes or does not include the USIM or the UICC. In this way, an authentication node may determine authentication information that is for the USIM or the UICC based on the indication, or determine authentication information that is for the ME based on the indication information. In other words, the first indication information may be used to indicate whether the UE side carries a card.

For example, a character string corresponding to the first indication information may be "USIM_Status". When the status is "1", it indicates that the UE includes the USIM; or when the character string is default, it indicates that the UE does not include the USIM. It should be understood that, when the first indication information is used to indicate whether the UE includes the UICC, a character string similar to that used to indicate whether the UE includes the USIM may also be used. It should be further understood that specific content of the character string used by the first indication information in this embodiment to indicate whether the UE includes the USIM or the UICC is merely used as an example for description, but is not limited.

Optionally, the UE sends a UE ID to the first authentication node, where the UE ID may be included in the first request message. The UE ID may be one or more of an IMSI, a PEI, an SUPI, an SUCI, a TMSI, an IMPU, a MAC address, an IP address, a mobile phone number, and a GUTI. Specific content of the UE ID is not limited in this application, and is uniformly represented by using the UE ID below.

Optionally, the UE sends third indication information to the first authentication node, where the third indication information is used to indicate an AKMA service. The third indication information may be carried in the first request message. In addition, a character string "AKMA" may be used to indicate the AKMA service; some specific values, for example, "1", may represent the AKMA service; or a specific value of a bit may be used to correspond to the AKMA service. Specific indication content of the AKMA service is not limited herein.

S902: The first authentication node sends a second request message to a second authentication node.

The second request message may be used to request an AKMA authentication vector from the second authentication node, and the second request message includes the first indication information.

Optionally, the second authentication node may be, for example, UDM or an ARPF, and the second authentication node stores authentication information of the UE.

Optionally, the second request message may further include the UE ID and a name (SN name) of a serving network in which the UE is currently located.

Optionally, the second request message may further include the third indication information, that is, the second request message includes information used to indicate AKMA.

S903: The second authentication node determines first authentication information or second authentication information.

Optionally, if the UE ID carried in the second request message is the SUCI, after receiving the second request message, the second authentication node may first activate an SIDF to decrypt the SUCI to obtain the SUPI.

Optionally, the second authentication node may determine the first authentication information or the second authentication information based on the first indication information in the second request message, where the first authentication information is the authentication information for the USIM or the UICC included in the UE, and the second authentication information is the authentication information for the ME included in the UE when the UE does not include the USIM or the UICC.

Optionally, after determining the first authentication information or the second authentication information based on the first indication information, the second authentication node may mark an authentication manner, so that the first authentication node or the UE can learn, based on the mark, whether authentication information is the authentication information for the USIM or the UICC or the authentication information for the ME.

In an example, when the second authentication node determines, based on the first indication information (where it is assumed that the first indication information indicates that the UE includes the USIM), the first authentication information that is for the USIM or the UICC, for example, an authentication vector that is for the USIM or the UICC, the second authentication node may further add one piece of second indication information for the authentication information. The second indication information is used to indicate that the authentication information determined by the current second authentication node is the authentication information for the USIM or the UICC.

In another example, when the second authentication node determines, based on the first indication information (where it is assumed that the first indication information indicates that the UE does not include the USIM), the second authentication information that is for the ME, where the second authentication information may be, for example, an authentication vector, second indication information added by the second authentication node may be used to indicate that the authentication information determined by the current second authentication node is the authentication information for the ME.

Optionally, the second indication information may be included, for example, in the authentication information such as the authentication vector, or may be included in a first reply message sent by the second authentication node to the first authentication node, or may be separately sent by the second authentication node to the first authentication node.

Optionally, the authentication information determined by the second authentication node may be an AKMAAV. For example, AKMA AV=(RAND, AUTN, XRES^{∗}, K_{AUSF}).

S904: The second authentication node sends the first reply message to the first authentication node.

The first reply message sent by the second authentication node to the first authentication node may include the first authentication information or the second authentication information determined by the second authentication node in step S903. Specifically, the first reply message may include the AKMA AV, where AKMA AV=(RAND, AUTN, XRES^{∗}, K_{AUSF}).

Optionally, the first reply message further includes the second indication information used to indicate whether the authentication information is for the USIM (or the UICC) or for the ME. For example, the second authentication node includes AKAM_ME or AKAM_U in the first reply message based on whether the UE includes the USIM or the UICC, where AKAM_ME is used to indicate that the authentication information determined by the second authentication node is the authentication information for the ME, and AKAM_U is used to indicate that the authentication information determined by the second authentication node is the authentication information for the USIM or the UICC.

Optionally, the first reply message may further include the UE ID such as the SUPI, or may further include the third indication information used to indicate the AKMA.

S905: The first authentication node sends a third request message to the UE.

Optionally, after receiving the first reply message sent by the second authentication node, the first authentication node may store the authentication information included in the first reply message, for example, store the XRES^{∗}, K_{AUSF}, and the like that are in the AKMA AV.

Optionally, the third request message includes authentication information that is used for UE authentication and key generation, for example, a RAND and an AUTN. The RAND and the AUTN may be in the first authentication information or may be in the second authentication information, and respectively correspond to the RAND and the AUTN in the authentication information determined by the second authentication node based on the first indication information.

Optionally, the third request message includes the second indication information.

Optionally, the first authentication node may send, to the UE by using a NAS message, the second indication information and/or the authentication information that is used for UE authentication and key generation, for example, the RAND and the AUTN.

S906: The UE determines a root key and a RES.

Optionally, after receiving the third request message sent by the first authentication node, the UE may determine whether to support the authentication. For example, the USIM or the ME of the UE may determine, based on whether the USIM or the ME can process the received RAND and AUTN, whether to support the authentication. Alternatively, the UE may determine, based on the second indication information included in the third request message, whether to support the authentication. In addition, the UE may further determine, based on the second indication information, whether the obtained RAND and AUTN are for the USIM (or the UICC) or for the ME.

In an example, if the UE determines that the received authentication information is for the USIM, that is, the UE may receive the RAND and the AUTN that are in the first authentication information, the ME may send the RAND and the AUTN to the UICC. The UICC determines freshness of the authentication information based on the AUTN to determine that the key is valid in a current time period, calculates a root key (denoted as Kakma) of AKMA based on the RAND, and generates a RES. The root key Kakma may be a key that is generated by the UE in the authentication process and that corresponds to a key of the first authentication node, and Kakma herein specifically refers to a root key in an AKMA framework. In addition, the UICC or the USIM may further send the generated RES to the ME, so that the ME can send the RES to an authentication node to perform a subsequent authentication process.

In another example, when the UE does not include the USIM or the UICC, the RAND and the AUTN that are received by the UE may be the authentication information for the ME, that is, the UE may receive the RAND and the AUTN that are in the second authentication information. In this case, the ME verifies freshness of the authentication information based on the AUTN, to determine that the key is valid in a current time period, then calculates a root key (Kakma) of AKMA based on the RAND, and generates a RES.

Optionally, when the UE determines to support the current authentication manner, the UE may subsequently send the generated RES to the first authentication node, so that the first authentication node performs further authentication. Specifically, when the current authentication is performed on the USIM or the UICC, the UISM or the UICC may send the generated RES to the ME, and then the ME sends the RES to the first authentication node. Alternatively, when the current authentication is performed on the ME, the ME generates a RES, and sends the RES to the first authentication node.

Optionally, when the UE determines not to support the authentication, that is, the USIM (or the UICC) and the ME that are included in the UE determine, based on an identifier of the authentication information or processing capabilities of the USIM (or the UICC) and the ME, not to support the current authentication manner, the UE may subsequently reply a failure message or a rejection message to an authentication node or a network. Alternatively, if the UE feeds back an error on the current authentication manner, the UE may subsequently reply a failure message or a rejection message to an authentication node or a network.

S907: The UE sends a second reply message to the first authentication node.

The second reply message includes the RES generated by the UE.

S908: The first authentication node verifies the RES.

Optionally, the first authentication node determines, based on the RES of the received second reply message, whether authentication on the UE succeeds. For example, the first authentication node may compare the received RES with an XRES stored by the first authentication node. If the received RES is consistent with the XRES, authentication on the UE succeeds.

Optionally, the first authentication node may generate a first AKMA key according to a KDF algorithm, and the first AKMA key is used to match the key generated by the UE. For example, the first AKMA key may be, for example, as follows: Kakma=KDF (K_{AUSF}, akma, fresh parameter, and the like), or Kakma=KDF (K_{AUSF}, Usim_Status, fresh parameter, and the like). An authentication feature related to the current authentication is included in the first key, so that the first AKMA key is bound to the authentication feature.

In addition, the first authentication node may further generate fourth indication information, where the fourth indication information is used to indicate a key corresponding to the first AKMA key. For example, the fourth indication information may be represented as, for example, KSIakma, which is used to index or indicate the key corresponding to the first AKMA key, for example, Kakma, so that the UE can determine the key corresponding to the first AKMA key.

Optionally, the first authentication node determines a key lifetime (lifetime) of the first AKMA key.

S909: The first authentication node sends an authentication success message to the UE.

The authentication success message includes the fourth indication information. For example, the fourth indication information may be represented as, for example, KSIakma, which is used to index or indicate the key corresponding to the first AKMA key. In other words, the UE can determine, based on the fourth indication information, a key that can match the first AKMA key.

Optionally, the first authentication node may further send the key lifetime of the first AKMA key to the UE, so that the UE can determine, based on the key lifetime, that the first AKMA key is valid at current time.

Optionally, after determining, based on the received authentication success message, that the first authentication node performs authentication successfully, the UE may generate a root key corresponding to the first AKMA key of the first authentication node, where the root key may be, for example, Kakma. The UE may determine, based on the received fourth indication information, the key corresponding to the first AKMA key.

It should be understood that, when sending the fourth indication information to the UE, the first authentication node may also send the UE a parameter required by the UE to generate the root key.

It should be understood that, in the authentication method provided in this embodiment of this application, when the UE sends the first request message to the first authentication node or when the first authentication node sends the second request message to the second authentication node, the first request message or the second request message may include a third-party application server ID, for example, an ID of an AKMA AF, or a temporary token (token) of the AKMA AF, so that a network side can determine, based on the information, that the current authentication is AKMA authentication.

In addition, for example, after authentication between the UE and an authentication node on a network side of an operator is performed, the UE may generate a key corresponding to the AKMA AF, where the key corresponding to the AKMA AF may be, for example, as follows: Kakma_AF_me=KDF (Kakma, "AKMA-ME", RAND, SUPI, AF_ID), or Ks_AF_UICC=KDF (Kakma, "AKMA_U", RAND, SUPI, AF_ID), where AF_ID is the third-party service server ID, and is used to indicate a service server corresponding to a service to be accessed by the UE. It should be understood that AF_ID may also be carried in a message obtained by the UDM/ARPF or the AAuF. For example, AF_ID is carried in the foregoing first request message or second request message, so that the UDM/ARPF learns of the service server corresponding to the service to be accessed by the UE.

According to the authentication method provided in this embodiment of this application, UE indicates, to an authentication node on a network side, whether the UE includes a UICC or a USIM, and the authentication node on the network side determines corresponding authentication information based on the indication. In this way, the UICC or ME included in the UE may generate a corresponding key based on the authentication information, so that the ME and the USIM may use different authentication methods to implement key isolation when the UE performs an AKMA service or in an AKMA authentication architecture.

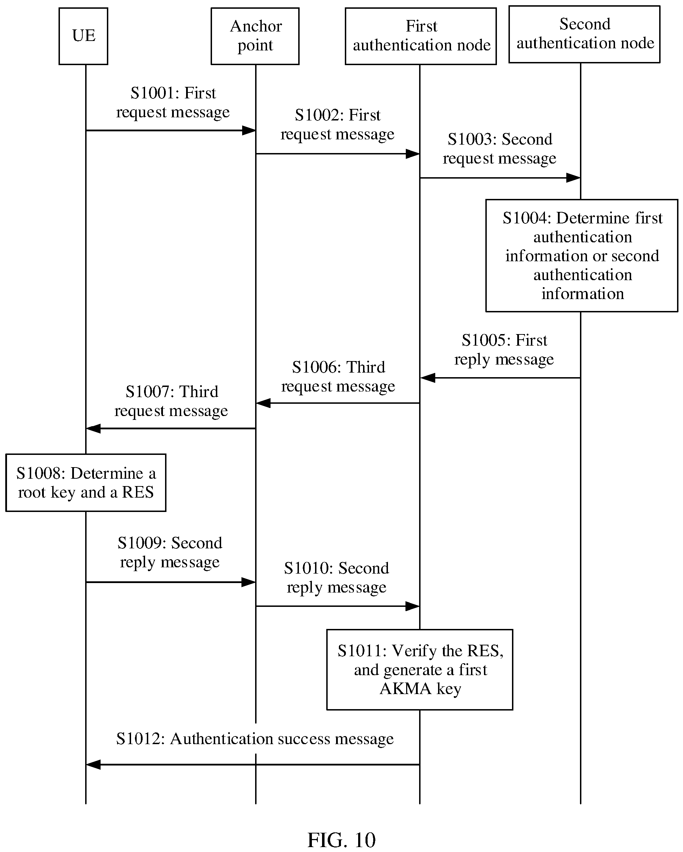

It should be understood that the authentication process shown in FIG. 9 is an authentication process based on a conventional and simple 3GPP AKA authentication architecture. The following describes an authentication process based on an existing EAP-AKA' authentication architecture with reference to FIG. 10.

FIG. 10 is a schematic flowchart of another authentication method according to an embodiment of this application.

It should be understood that an authentication process shown in FIG. 10 is similar to the authentication process shown in FIG. 9. Different from the authentication process shown in FIG. 9, in the authentication process shown in this embodiment, a network element, on a network side, interacting with UE further includes a security anchor function (SEAF). The following describes the authentication process.

S1001: The UE sends a first request message to the security anchor function (SEAF).

The UE may include a USIM or a UICC, or may not include the USIM or the UICC. It should be understood that, when the UE includes the USIM or the UICC, authentication may be performed on the USIM or the UICC and a key is generated. When the UE does not include the USIM or the UICC, authentication may be performed on ME included in the UE and a key is generated.

S1002: The SEAF forwards, to a first authentication node, the received first request message sent by the UE.

The first authentication node may be an authentication node of an operator. The first authentication node may be, for example, an AUSF or an AAuF. When the first authentication node is the AAuF, the first authentication node and the AUSF may be deployed together or deployed separately.

Specifically, the first request message may be used to trigger authentication on the UE by the network side. The first request message may include first indication information, and the first indication information is used to indicate that the UE includes or does not include the USIM or the UICC. In this way, an authentication node may determine authentication information that is for the USIM or the UICC based on the indication, or determine authentication information that is for the ME based on the indication information. In other words, the first indication information may be used to indicate whether the UE side carries a card.

For example, a character string corresponding to the first indication information may be "USIM_Status". When the status is "1", it indicates that the UE includes the USIM; or when the character string is default, it indicates that the UE does not include the USIM. It should be understood that, when the first indication information is used to indicate whether the UE includes the UICC, a character string similar to that used to indicate whether the UE includes the USIM may also be used. It should be further understood that specific content of the character string used by the first indication information in this embodiment to indicate whether the UE includes the USIM or the UICC is merely used as an example for description, but is not limited.

Optionally, the UE sends a UE ID to the first authentication node, where the UE ID may be included in the first request message. The UE ID may be one or more of an IMSI, a PEI, an SUPI, an SUCI, a TMSI, an IMPU, a MAC address, an IP address, a mobile phone number, and a GUTI. Specific content of the UE ID is not limited in this application, and is uniformly represented by using the UE ID below.

Optionally, the first request message may include third indication information, and the third indication information is used to indicate an AKMA service. For example, a character string "AKMA" may be used to indicate the AKMA service; some specific values, for example, "1", may represent the AKMA service; or a specific value of a bit may be used to correspond to the AKMA service. Specific indication content of the AKMA service is not limited herein.

It can be learned from S1001 and S1002 that, different from the authentication process shown in FIG. 9, in the authentication process shown in FIG. 10, the UE does not directly interact with the first authentication node, but the SEAF performs transparent transmission.

S1003: The first authentication node sends a second request message to a second authentication node.

The second request message may be used to request an AKMA authentication vector from the second authentication node, and the second request message includes the first indication information.

Optionally, the second authentication node may be, for example, UDM or an ARPF, and the second authentication node stores authentication information of the UE.

Optionally, the second request message may further include the UE ID and a name (SN name) of a serving network in which the UE is currently located.

Optionally, the second request message may further include the third indication information, that is, the second request message includes information used to indicate AKMA.

S1004: The second authentication node determines first authentication information or second authentication information.

Optionally, if the UE ID carried in the second request message is the SUCI, after receiving the second request message, the second authentication node may first activate an SIDF to decrypt the SUCI to obtain the SUPI.

Optionally, the second authentication node may determine the first authentication information or the second authentication information based on the first indication information in the second request message, where the first authentication information is the authentication information for the USIM or the UICC included in the UE, and the second authentication information is the authentication information for the ME included in the UE when the UE does not include the USIM or the UICC.

Optionally, after determining the first authentication information or the second authentication information based on the first indication information, the second authentication node may mark an authentication manner, so that the first authentication node or the UE can learn, based on the mark, whether authentication information is the authentication information for the USIM or the UICC or the authentication information for the ME.

In an example, when the second authentication node determines, based on the first indication information (where it is assumed that the first indication information indicates that the UE includes the USIM), the first authentication information that is for the USIM or the UICC, for example, an authentication vector that is for the USIM or the UICC, the second authentication node may further add one piece of second indication information for the authentication information. The second indication information is used to indicate that the authentication information determined by the current second authentication node is the authentication information for the USIM or the UICC.

In another example, when the second authentication node determines, based on the first indication information (where it is assumed that the first indication information indicates that the UE does not include the USIM), the second authentication information that is for the ME, where the second authentication information may be, for example, an authentication vector, second indication information added by the second authentication node may be used to indicate that the authentication information determined by the current second authentication node is the authentication information for the ME.

Optionally, the second indication information may be included, for example, in the authentication information such as the authentication vector, or may be included in a first reply message sent by the second authentication node to the first authentication node, or may be separately sent by the second authentication node to the first authentication node.

Optionally, the authentication information determined by the second authentication node may be a 5G AKMA AV, where 5G AKMA AV=(RAND, AUTN, CK', IK', XRES). For a specific generation process, refer to the foregoing related descriptions.

S1005: The second authentication node sends the first reply message to the first authentication node.

The first reply message sent by the second authentication node to the first authentication node may include the first authentication information or the second authentication information determined by the second authentication node in step S1004. Specifically, the first reply message may include the 5G AKMA AV, where 5G AKMA AV=(RAND, AUTN, CK', IK', XRES).

Optionally, the first reply message further includes the second indication information used to indicate whether the authentication information is for the USIM (or the UICC) or for the ME. For example, the second authentication node includes AKAM_ME or AKAM_U in the first reply message based on whether the UE includes the USIM or the UICC, where AKAM_ME is used to indicate that the authentication information determined by the second authentication node is the authentication information for the ME, and AKAM_U is used to indicate that the authentication information determined by the second authentication node is the authentication information for the USIM or the UICC.

Optionally, the first reply message may further include the UE ID such as the SUPI, or may further include the third indication information used to indicate the AKMA.

S1006: The first authentication node sends a third request message to the SEAF.

Optionally, after receiving the first reply message sent by the second authentication node, the first authentication node may store the authentication information included in the first reply message, for example, store the XRES and the like that are in the AKMA AV.

S 1007: The SEAF forwards the third request message to the UE.

Optionally, the third request message includes authentication information that is used for UE authentication and key generation, for example, a RAND and an AUTN. The RAND and the AUTN may be in the first authentication information or may be in the second authentication information, and respectively correspond to the RAND and the AUTN in the authentication information determined by the second authentication node based on the first indication information.

Optionally, the third request message includes the second indication information.

Optionally, the first authentication node may send, to the UE by using a NAS message, the second indication information and/or the authentication information that is used for UE authentication and key generation, for example, the RAND and the AUTN.

It should be understood that, with reference to step S1005 and step S1006, a function of the SEAF is transparent transmission.

S1008: The UE determines a root key and a RES.

Optionally, after receiving the third request message sent by the first authentication node, the UE may determine whether to support the authentication. For example, the USIM or the ME of the UE may determine, based on whether the USIM or the ME can process the received RAND and AUTN, whether to support the authentication. Alternatively, the UE may determine, based on the second indication information included in the third request message, whether to support the authentication. In addition, the UE may further determine, based on the second indication information, whether the obtained RAND and AUTN are for the USIM (or the UICC) or for the ME.

In an example, if the UE determines that the received authentication information is for the USIM, that is, the UE may receive the RAND and the AUTN that are in the first authentication information, the ME may send the RAND and the AUTN to the UICC. The UICC determines freshness of the authentication information based on the AUTN to determine that the key is valid in a current time period, calculates a root key (denoted as Kakma) of AKMA based on the RAND, and generates a RES. The root key Kakma may be a key that is generated by the UE in the authentication process and that corresponds to a key of the first authentication node, and Kakma herein specifically refers to a root key in an AKMA framework. In addition, the UICC or the USIM may further send the generated RES to the ME, so that the ME can send the RES to an authentication node to perform a subsequent authentication process.

In another example, when the UE does not include the USIM or the UICC, the RAND and the AUTN that are received by the UE may be the authentication information for the ME, that is, the UE may receive the RAND and the AUTN that are in the second authentication information. In this case, the ME verifies freshness of the authentication information based on the AUTN, to determine that the key is valid in a current time period, then calculates a root key (Kakma) of AKMA based on the RAND, and generates a RES.

Optionally, when the UE determines to support the current authentication manner, the UE may subsequently send the generated RES to the first authentication node, so that the first authentication node performs further authentication. Specifically, when the current authentication is performed on the USIM or the UICC, the UISM or the UICC may send the generated RES to the ME, and then the ME sends the RES to the first authentication node. Alternatively, when the current authentication is performed on the ME, the ME generates a RES, and sends the RES to the first authentication node.

Optionally, when the UE determines not to support the authentication, that is, the USIM (or the UICC) and the ME that are included in the UE determine, based on an identifier of the authentication information or processing capabilities of the USIM (or the UICC) and the ME, not to support the current authentication manner, the UE may subsequently reply a failure message or a rejection message to an authentication node or a network. Alternatively, if the UE feeds back an error on the current authentication manner, the UE may subsequently reply a failure message or a rejection message to an authentication node or a network.

S1009: The UE sends a second reply message to the SEAF.

The second reply message includes the RES generated by the UE.

S1010: The SEAF forwards the second reply message to the first authentication node.

S1011: The first authentication node verifies the RES, and generates a first AKMA key.

Optionally, the first authentication node determines, based on the RES of the received second reply message, whether authentication on the UE succeeds. For example, the first authentication node may compare the received RES with an XRES stored by the first authentication node. If the received RES is consistent with the XRES, authentication on the UE succeeds.

Optionally, the first authentication node may generate the first AKMA key according to a KDF algorithm, and the first AKMA key is used to match the root key generated by the UE. For example, the first AKMA key may be, for example, as follows: Kakma=KDF (K_{AUSF}, akma, fresh parameter, and the like), or Kakma=KDF (K_{AUSF}, Usim_Status, fresh parameter, and the like). An authentication feature related to the current authentication is included in the first AKMA key, so that the first AKMA key is bound to the authentication feature.

In addition, the first authentication node may further generate fourth indication information, where the fourth indication information is used to indicate a key corresponding to the first AKMA key. For example, the fourth indication information may be represented as, for example, KSIakma, which is used to index or indicate the key corresponding to the first AKMA key. In other words, the UE can determine, based on the fourth indication information, a key that can match the first AKMA key.

Optionally, the first authentication node determines a key lifetime of the first AKMA key.

S1012: The first authentication node sends an authentication success message to the UE.

The authentication success message includes the fourth indication information, and the fourth indication information is used to indicate, to the UE, a key corresponding to the first AKMA key.

Optionally, the first authentication node may further send the key lifetime of the first AKMA key to the UE, so that the UE can determine, based on the key lifetime, that the first AKMA key is valid at current time.

Optionally, after determining, based on the received authentication success message, that the first authentication node performs authentication successfully, the UE may generate a root key corresponding to the first AKMA key of the first authentication node, where the root key may be, for example, Kakma. The UE may determine, based on the received fourth indication information, the key corresponding to the first AKMA key.

It should be understood that, when sending the fourth indication information to the UE, the first authentication node may also send the UE a parameter required by the UE to generate the root key.

It should be understood that, in the authentication method provided in this embodiment of this application, when the UE sends the first request message to the first authentication node or when the first authentication node sends the second request message to the second authentication node, the first request message or the second request message may include a third-party application server ID, for example, an ID of an AKMA AF, or a temporary token (token) of the AKMA AF, so that a network side can determine, based on the information, that the current authentication is AKMA authentication.

In addition, for example, after authentication between the UE and an authentication node on a network side of an operator is performed, the UE may generate a key corresponding to the AKMA AF, where the key corresponding to the AKMA AF may be, for example, as follows: Kakma_AF_me=KDF (Kakma, "AKMA-ME", RAND, SUPI, AF_ID), or Ks_AF_UICC=KDF (Kakma, "AKMA_U", RAND, SUPI, AF_ID), where AF_ID is the third-party service server ID, and is used to indicate a service server corresponding to a service to be accessed by the UE. It should be understood that AF_ID may also be carried in a message obtained by the UDM/ARPF or the AAuF. For example, AF_ID is carried in the foregoing first request message or second request message, so that the UDM/ARPF learns of the service server corresponding to the service to be accessed by the UE.

According to the authentication method provided in this embodiment of this application, UE indicates, to an authentication node on a network side, whether the UE includes a UICC or a USIM, and the authentication node on the network side determines corresponding authentication information based on the indication. In this way, the UICC or ME included in the UE may generate a corresponding key based on the authentication information, so that the ME and the USIM may use different authentication methods to implement key isolation when the UE performs an AKMA service or in an AKMA authentication architecture.

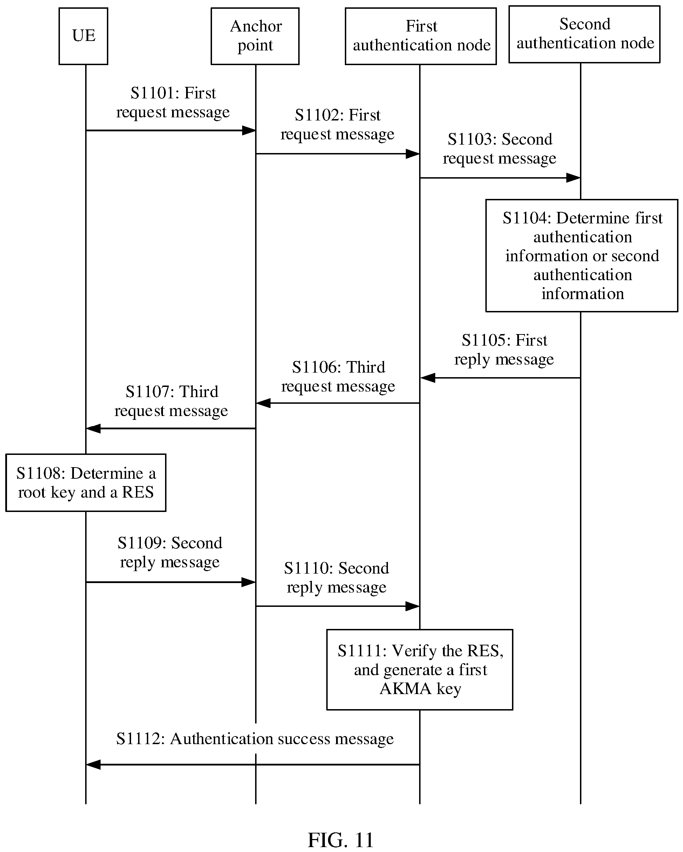

It should be understood that the authentication process shown in FIG. 9 is an authentication process based on a conventional and simple 3GPP AKA manner, and the authentication process shown in FIG. 10 is an authentication process based on an existing EAP-AKA' manner. With reference to FIG. 11, the following describes an authentication manner based on a 5G AKA authentication architecture.

FIG. 11 is a schematic flowchart of still another authentication method according to an embodiment of this application.

It should be understood that an authentication architecture shown in FIG. 11 is similar to the authentication architecture shown in FIG. 10. The following describes the authentication process.

S1101: UE sends a first request message to a security anchor function (SEAF).

The UE may include a USIM or a UICC, or may not include the USIM or the UICC. It should be understood that, when the UE includes the USIM or the UICC, authentication may be performed on the USIM or the UICC and a key is generated. When the UE does not include the USIM or the UICC, authentication may be performed on ME included in the UE and a key is generated.

S1102: The SEAF forwards, to a first authentication node, the received first request message sent by the UE.

The first authentication node may be an authentication node of an operator. The first authentication node may be, for example, an AUSF or an AAuF. When the first authentication node is the AAuF, the first authentication node and the AUSF may be deployed together or deployed separately.

Specifically, the first request message may be used to trigger authentication on the UE by a network side. The first request message may include first indication information, and the first indication information is used to indicate that the UE includes or does not include the USIM or the UICC. In this way, an authentication node may determine authentication information that is for the USIM or the UICC based on the indication, or determine authentication information that is for the ME based on the indication information. In other words, the first indication information may be used to indicate whether the UE side carries a card.

For example, a character string corresponding to the first indication information may be "USIM_Status". When the status is "1", it indicates that the UE includes the USIM; or when the character string is default, it indicates that the UE does not include the USIM. It should be understood that, when the first indication information is used to indicate whether the UE includes the UICC, a character string similar to that used to indicate whether the UE includes the USIM may also be used. It should be further understood that specific content of the character string used by the first indication information in this embodiment to indicate whether the UE includes the USIM or the UICC is merely used as an example for description, but is not limited.

Optionally, the UE sends a UE ID to the first authentication node, where the UE ID may be included in the first request message. The UE ID may be one or more of an IMSI, a PEI, an SUPI, an SUCI, a TMSI, an IMPU, a MAC address, an IP address, a mobile phone number, and a GUTI. Specific content of the UE ID is not limited in this application, and is uniformly represented by using the UE ID below.

Optionally, the first request message may include third indication information, and the third indication information is used to indicate an AKMA service. For example, a character string "AKMA" may be used to indicate the AKMA service; some specific values, for example, "1", may represent the AKMA service; or a specific value of a bit may be used to correspond to the AKMA service. Specific indication content of the AKMA service is not limited herein.

It can be learned from S1101 and S 1102 that, different from the authentication process shown in FIG. 9, in the authentication process shown in FIG. 11, the UE does not directly interact with the first authentication node, but the SEAF performs transparent transmission.

S1103: The first authentication node sends a second request message to a second authentication node.

The second request message may be used to request an AKMA authentication vector from the second authentication node, and the second request message includes the first indication information.

Optionally, the second authentication node may be, for example, UDM or an ARPF, and the second authentication node stores authentication information of the UE.

Optionally, the second request message may further include the UE ID and a name (SN name) of a serving network in which the UE is currently located.

Optionally, the second request message may further include the third indication information, that is, the second request message includes information used to indicate an AKMA service, so that the authentication node may determine that the current authentication is AKMA authentication.

S1104: The second authentication node determines first authentication information or second authentication information.

Optionally, if the UE ID carried in the second request message is the SUCI, after receiving the second request message, the second authentication node may first activate an SIDF to decrypt the SUCI to obtain the SUPI.

Optionally, the second authentication node may determine the first authentication information or the second authentication information based on the first indication information in the second request message, where the first authentication information is the authentication information for the USIM or the UICC included in the UE, and the second authentication information is the authentication information for the ME included in the UE when the UE does not include the USIM or the UICC.

Optionally, after determining the first authentication information or the second authentication information based on the first indication information, the second authentication node may mark an authentication manner, so that the first authentication node or the UE can learn, based on the mark, whether authentication information is the authentication information for the USIM or the UICC or the authentication information for the ME.

In an example, when the second authentication node determines, based on the first indication information (where it is assumed that the first indication information indicates that the UE includes the USIM), the first authentication information that is for the USIM or the UICC, for example, the first authentication information may be an authentication vector that is for the USIM or the UICC, the second authentication node may further add one piece of second indication information for the authentication information. The second indication information is used to indicate that the authentication information determined by the current second authentication node is the authentication information for the USIM or the UICC.

In another example, when the second authentication node determines, based on the first indication information (where it is assumed that the first indication information indicates that the UE does not include the USIM), the second authentication information that is for the ME, where the second authentication information may be, for example, an authentication vector, second indication information added by the second authentication node may be used to indicate that the authentication information determined by the current second authentication node is the authentication information for the ME.

Optionally, the second indication information may be included, for example, in the authentication information such as the authentication vector, or may be included in a first reply message sent by the second authentication node to the first authentication node, or may be separately sent by the second authentication node to the first authentication node.

Optionally, the authentication information determined by the second authentication node may be a 5G AKMA HE AV, where 5G AKMA HE AV=(RAND, AUTN, XRES^{∗}, K_{AUSF}). For a specific generation process, refer to the foregoing related descriptions.

S 1105: The second authentication node sends the first reply message to the first authentication node.

The first reply message sent by the second authentication node to the first authentication node may include the first authentication information or the second authentication information determined by the second authentication node in step S 1104. Specifically, the first reply message may include the 5G AKMA HE AV, where 5G AKMA HE AV=(RAND, AUTN, XRES^{∗}, K_{AUSF}).

Optionally, the first reply message further includes the second indication information used to indicate whether the authentication information is for the USIM (or the UICC) or for the ME. For example, the second authentication node includes AKMA_ME or AKMA_U in the first reply message based on whether the UE includes the USIM or the UICC, where AKAM_ME is used to indicate that the authentication information determined by the second authentication node is the authentication information for the ME, and AKMA_U is used to indicate that the authentication information determined by the second authentication node is the authentication information for the USIM or the UICC.

Optionally, the first reply message may further include the UE ID such as the SUPI, or may further include the third indication information used to indicate the AKMA service.

S 1106: The first authentication node sends a third request message to the SEAF.

Optionally, after receiving the first reply message sent by the second authentication node, the first authentication node may store the authentication information included in the first reply message, for example, store the XRES^{∗} and the like that are in the 5G AKMA HE AV.

Optionally, before sending the third request message to the SEAF, the first authentication node calculates a hash value HXRES^{∗} of the XRES^{*}.

S 1107: The SEAF forwards the third request message to the UE.

Optionally, the third request message includes authentication information that is used for UE authentication and key generation, for example, a RAND and an AUTN. The RAND and the AUTN may be in the first authentication information or may be in the second authentication information, and respectively correspond to the RAND and the AUTN in the authentication information determined by the second authentication node based on the first indication information.

Optionally, the third request message includes the second indication information.

Optionally, the first authentication node may send, to the UE by using a NAS message, the second indication information and/or the authentication information that is used for UE authentication and key generation, for example, the RAND and the AUTN.

It should be understood that, with reference to step S1106 and step S1107, a function of the SEAF is transparent transmission.

S1108: The UE determines a root key and a RES.

Optionally, after receiving the third request message sent by the first authentication node, the UE may determine whether to support the authentication. For example, the USIM or the ME of the UE may determine, based on whether the USIM or the ME can process the received RAND and AUTN, whether to support the authentication. Alternatively, the UE may determine, based on the second indication information included in the third request message, whether to support the authentication. In addition, the UE may further determine, based on the second indication information, whether the obtained RAND and AUTN are for the USIM (or the UICC) or for the ME.

In an example, if the UE determines that the received authentication information is for the USIM, that is, the UE may receive the RAND and the AUTN that are in the first authentication information, the ME may send the RAND and the AUTN to the UICC. The UICC determines freshness of the authentication information based on the AUTN to determine that the key is valid in a current time period, calculates a root key (denoted as Kakma) of AKMA based on the RAND, and generates a RES^{∗}. The root key Kakma may be a key that is generated by the UE in the authentication process and that corresponds to a key of the first authentication node, and Kakma herein specifically refers to a root key in an AKMA framework. In addition, the UICC or the USIM may further send the generated RES to the ME, so that the ME can send the RES to an authentication node to perform a subsequent authentication process.

In another example, when the UE does not include the USIM or the UICC, the RAND and the AUTN that are received by the UE may be the authentication information for the ME, that is, the UE may receive the RAND and the AUTN that are in the second authentication information. In this case, the ME verifies freshness of the authentication information based on the AUTN, to determine that the key is valid in a current time period, then calculates a root key (Kakma) of AKMA based on the RAND, and generates a RES.

Optionally, when the UE determines to support the current authentication manner, the UE may subsequently send the generated RES to the first authentication node, so that the first authentication node performs further authentication. Specifically, when the current authentication is performed on the USIM or the UICC, the UISM or the UICC may send the generated RES to the ME, and then the ME sends the RES to the first authentication node. Alternatively, when the current authentication is performed on the ME, the ME generates a RES, and sends the RES to the first authentication node.

Optionally, when the UE determines not to support the authentication, that is, the USIM (or the UICC) and the ME that are included in the UE determine, based on an identifier of the authentication information or processing capabilities of the USIM (or the UICC) and the ME, not to support the current authentication manner, the UE may subsequently reply a failure message or a rejection message to an authentication node or a network. Alternatively, if the UE feeds back an error on the current authentication manner, the UE may subsequently reply a failure message or a rejection message to an authentication node or a network.

S1109: The UE sends a second reply message to the SEAF.

The second reply message includes the RES generated by the UE.

S1110: The SEAF forwards the second reply message to the first authentication node.

S1111: The first authentication node verifies the RES, and generates a first AKMA key.

Optionally, the first authentication node determines, based on the RES of the received second reply message, whether authentication on the UE succeeds. For example, the first authentication node may compare the received RES with an XRES stored by the first authentication node. If the received RES is consistent with the XRES, authentication on the UE succeeds.

Optionally, the first authentication node may generate the first AKMA key according to a KDF algorithm, and the first AKMA key is used to match the key generated by the UE. For example, the first AKMA key may be, for example, as follows: Kakma=KDF (K_{AUSF}, akma, fresh parameter, and the like), or Kakma=KDF (K_{AUSF}, Usim_Status, fresh parameter, and the like). An authentication feature related to the current authentication is included in the first key, so that the first AKMA key is bound to the authentication feature.

In addition, the first authentication node may further generate fourth indication information, where the fourth indication information is used to indicate a key corresponding to the first AKMA key. For example, the fourth indication information may be represented as KSIakma. For example, the fourth indication information may be represented as KSIakma, which is used to index or indicate the key corresponding to the first AKMA key. In other words, the UE can determine, based on the fourth indication information, a key that can match the first AKMA key.

Optionally, the first authentication node determines a key lifetime of the first AKMA key.

S1112: The first authentication node sends an authentication success message to the UE.

The authentication success message includes the fourth indication information, and the fourth indication information is used to indicate, to the UE, a key corresponding to the first AKMA key.

Optionally, the first authentication node may further send the key lifetime of the first AKMA key to the UE, so that the UE can determine, based on the key lifetime, that the first AKMA key is valid at current time.

Optionally, after determining, based on the received authentication success message, that the first authentication node performs authentication successfully, the UE may generate a root key corresponding to the first AKMA key of the first authentication node, where the root key may be, for example, Kakma. The UE may determine, based on the received fourth indication information, the key corresponding to the first AKMA key.

It should be understood that, when sending the fourth indication information to the UE, the first authentication node may also send the UE a parameter required by the UE to generate the root key.

It should be understood that, in the authentication method provided in this embodiment of this application, when the UE sends the first request message to the first authentication node or when the first authentication node sends the second request message to the second authentication node, the first request message or the second request message may include a third-party application server ID, for example, an ID of an AKMA AF, or a temporary token (token) of the AKMA AF, so that a network side can determine, based on the information, that the current authentication is AKMA authentication.

In addition, for example, after authentication between the UE and an authentication node on a network side of an operator is performed, the UE may generate a key corresponding to the AKMA AF, where the key corresponding to the AKMA AF may be, for example, as follows: Kakma_AF_me=KDF (Kakma, "AKMA-ME", RAND, SUPI, AF_ID), or Ks_AF_UICC=KDF (Kakma, "AKMA_U", RAND, SUPI, AF_ID), where AF_ID is the third-party service server ID, and is used to indicate a service server corresponding to a service to be accessed by the UE. It should be understood that AF_ID may also be carried in a message obtained by the UDM/ARPF or the AAuF. For example, AF_ID is carried in the foregoing first request message or second request message, so that the UDM/ARPF learns of the service server corresponding to the service to be accessed by the UE.

According to the authentication method provided in this embodiment of this application, UE indicates, to an authentication node on a network side, whether the UE includes a UICC or a USIM, and the authentication node on the network side determines corresponding authentication information based on the indication. In this way, the UICC or ME included in the UE may generate a corresponding key based on the authentication information, so that the ME and the USIM may use different authentication methods to implement key isolation when the UE performs an AKMA service or in an AKMA authentication architecture.

It should be understood that, in the authentication method provided in this application, to finally achieve key isolation, the UICC may further derive a layer of key after obtaining Ks_AF_UICC, so that the ME cannot obtain the final key.

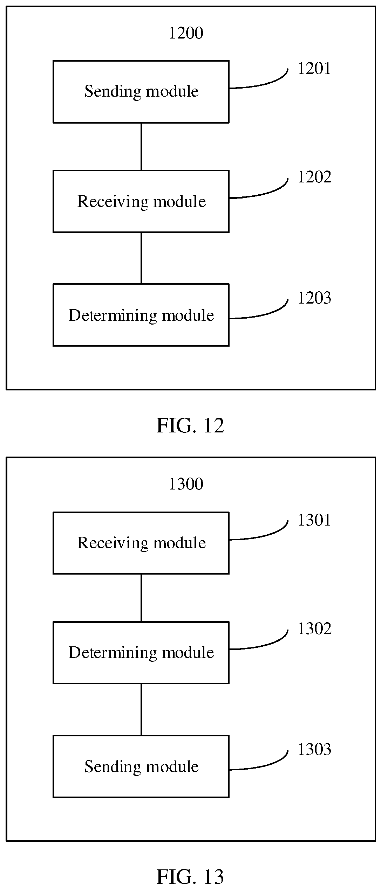

FIG. 12 is a schematic diagram of a structure of user equipment according to an embodiment of this application. The user equipment 1200 includes a sending module 1201, a receiving module 1202, and a determining module 1203.

Optionally, the sending module 1201 is configured to send a first request message to a first authentication node, where the first request message includes first indication information, and the first indication information is used to indicate that the UE includes a universal subscriber identity module (USIM) or does not include the USIM.

Optionally, the receiving module 1202 is configured to receive a third request message sent by the first authentication node, where the third request message includes a random number (RAND) and an authentication token (AUTN) in first authentication information, or a RAND and an AUTN in second authentication information, where the first authentication information is authentication information for the USIM included in the UE, and the second authentication information is authentication information for mobile equipment included in the UE when the UE does not include the USIM.

Optionally, the determining module 1203 is configured to determine, based on the third request message, a root key and a user response (RES) of the USIM included in the UE or the mobile equipment included in the UE.

Optionally, the determining module 1203 may be further configured to: when the UE includes the USIM, determine the key and the RES based on the RAND in the first authentication information; or when the UE does not include the USIM, determine the root key and the RES based on the RAND in the second authentication information.

Optionally, the determining module 1203 may be further configured to determine, based on the second indication information, that the authentication information included in the third request message is for the USIM or for the mobile equipment.

Optionally, the determining module 1203 may be further configured to: when the UE includes the USIM, verify the AUTN in the first authentication information; or when the UE does not include the USIM, verify the AUTN in the second authentication information.

Optionally, the sending module 1201 may be further configured to send a second reply message to the first authentication node, where the second reply message includes the RES.

Optionally, the receiving module 1202 may be further configured to receive fourth indication information and a key lifetime of a first AKMA key that are sent by the first authentication node, where the first AKMA key is a key generated by the first authentication node based on the first authentication information or the second authentication information, and the fourth indication information is used to indicate a key corresponding to the first AKMA key.

FIG. 13 is a schematic diagram of a structure of an authentication apparatus according to an embodiment of this application. The authentication apparatus 1300 includes a receiving module 1301, a determining module 1302, and a sending module 1303.

Optionally, the receiving module 1301 is configured to receive a second request message sent by a first authentication node, where the second request message is used to request authentication information from a second authentication node, the second request message includes first indication information, and the first indication information is used to indicate that UE includes a USIM or does not include the USIM.

Optionally, the determining module 1302 is configured to determine first authentication information or second authentication information based on the first indication information, where the first authentication information is authentication information for the USIM included in the UE, and the second authentication information is authentication information for mobile equipment included in the UE when the UE does not include the USIM.

Optionally, the sending module 1303 is configured to send a first reply message to the first authentication node, where the first reply message includes the first authentication information or the second authentication information.

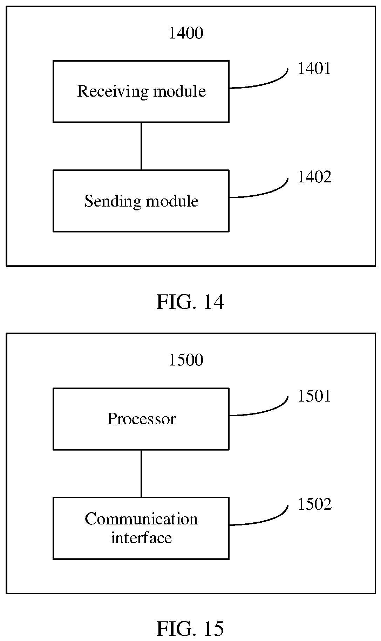

FIG. 14 is a schematic diagram of a structure of an authentication apparatus according to an embodiment of this application. The authentication apparatus 1400 includes a receiving module 1401 and a sending module 1402.

Optionally, the receiving module 1401 is configured to receive a first request message sent by UE, where the first request message includes first indication information, and the first indication information is used to indicate that the UE includes a USIM or does not include the USIM.

Optionally, the sending module 1402 is configured to send a second request message to a second authentication node, where the second request message is used to request authentication information from the second authentication node, and the second request message includes the first indication information.

Optionally, the receiving module 1401 is further configured to receive a first reply message sent by the second authentication node, where the first reply message includes first authentication information or second authentication information, the first authentication information is authentication information for the USIM included in the UE, and the second authentication information is authentication information for mobile equipment included in the UE when the UE does not include the USIM.

Optionally, the sending module 1402 is further configured to send a third request message to the UE, where the third request message includes a random number (RAND) and an authentication token (AUTN) in the first authentication information, or a RAND and an AUTN in the second authentication information.

Optionally, the receiving module 1401 may be further configured to receive a second reply message sent by the UE, where the second reply message includes a RES.

Optionally, the authentication apparatus 1400 may further include a determining module, where the determining module is configured to: determine, based on the RES, that authentication on the UE succeeds, and generate a first AKMA key, where the first AKMA key is a key generated by the first authentication node based on the first authentication information or the second authentication information.

Optionally, the sending module 1402 may be further configured to send fourth indication information and a key lifetime of the first AKMA key to the UE, where the fourth indication information is used to indicate a key corresponding to the first AKMA key.

FIG. 15 is a schematic diagram of a structure of an authentication apparatus according to this application. The authentication apparatus 1500 includes at least one processor 1501 and a communication interface 1502, the communication interface is used by the communication apparatus to exchange information with another communication apparatus; and when program instructions are executed in the at least one processor, the communication apparatus is enabled to implement functions of the authentication method according to the foregoing embodiments of this application on the UE, the first authentication node, or the second authentication node.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed operating process of the foregoing systems, devices, and units, refer to corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in the embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, comprising:
sending, by user equipment (UE), a first request message to a first authentication node, wherein the first request message comprises first indication information, and the first indication information is used to indicate that the UE comprises a universal subscriber identity module (USIM) or does not comprise the USIM;
receiving, by the UE, a third request message sent by the first authentication node, wherein the third request message comprises a random number (RAND) and an authentication token (AUTN) in first authentication information, or a RAND and an AUTN in second authentication information, wherein the first authentication information is authentication information for the USIM comprised in the UE, and the second authentication information is authentication information for mobile equipment comprised in the UE when the UE does not comprise the USIM; and
determining, by the UE based on the third request message, a root key and a user response (RES) of the USIM comprised in the UE or the mobile equipment comprised in the UE.

2. The method according to claim 1, wherein the determining, by the UE based on the third request message, a root key and a RES of the USIM comprised in the UE or the mobile equipment comprised in the UE comprises:
when the UE comprises the USIM, determining, by the USIM, the key and the RES based on the RAND in the first authentication information; or
when the UE does not comprise the USIM, determining, by the mobile equipment, the root key and the RES based on the RAND in the second authentication information.

3. The method according to claim 1 or 2, wherein the third request message further comprises second indication information, and the second indication information is used to indicate that the authentication information comprised in the third request message is for the USIM or for the mobile equipment.

4. The method according to claim 3, wherein the method further comprises:
determining, by the UE based on the second indication information, that the authentication information comprised in the third request message is for the USIM or for the mobile equipment.

5. The method according to any one of claims 1 to 4, wherein the method further comprises:
when the UE comprises the USIM, verifying, by the USIM, the AUTN in the first authentication information; or
when the UE does not comprise the USIM, verifying, by the mobile equipment, the AUTN in the second authentication information.

6. The method according to any one of claims 1 to 5, wherein the first request message comprises third indication information, and the third indication information is used to indicate an AKMA service.

7. The method according to any one of claims 1 to 6, wherein the method further comprises:
sending, by the UE, a second reply message to the first authentication node, wherein the second reply message comprises the RES.

8. The method according to claim 7, wherein the method further comprises:
when the UE comprises the USIM, sending, by the USIM to the mobile equipment, the RES determined by the USIM.

9. The method according to any one of claims 1 to 8, wherein the method further comprises:
receiving, by the UE, fourth indication information and a key lifetime of a first AKMA key that are sent by the first authentication node, wherein the first AKMA key is a key generated by the first authentication node based on the first authentication information or the second authentication information, and the fourth indication information is used to indicate a key corresponding to the first AKMA key.

10. The method according to claim 9, wherein the fourth indication information is carried in an authentication success message.

11. The method according to any one of claims 1 to 10, wherein the first request message comprises an ID of an AKMA application function (AF) and/or an authentication token of the AKMA.

12. An authentication method, comprising:
receiving, by a second authentication node, a second request message sent by a first authentication node, wherein the second request message is used to request authentication information from the second authentication node, the second request message comprises first indication information, and the first indication information is used to indicate that UE comprises a USIM or does not comprise the USIM;
determining, by the second authentication node, first authentication information or second authentication information based on the first indication information, wherein the first authentication information is authentication information for the USIM comprised in the UE, and the second authentication information is authentication information for mobile equipment comprised in the UE when the UE does not comprise the USIM; and
sending, by the second authentication node, a first reply message to the first authentication node, wherein the first reply message comprises the first authentication information or the second authentication information.

13. The method according to claim 12, wherein the determining, by the second authentication node, first authentication information or second authentication information based on the first indication information comprises:
when the first indication information indicates that the UE comprises the USIM, determining, by the second authentication node, the first authentication information; or
when the first indication information indicates that the UE does not comprise the USIM, determining, by the second authentication node, the second authentication information.

14. The method according to claim 12 or 13, wherein the first reply message comprises second indication information, and the second indication information is used to indicate that the authentication information sent by the second authentication node to the first authentication node is for the USIM or for the mobile equipment.

15. The method according to any one of claims 12 to 14, wherein the method further comprises:
the second request message received by the second authentication node comprises an ID of an AKMA AF and/or an authentication token of the AKMA; and
determining, by the second authentication node based on the ID of the AKMA AF and/or the authentication token of the AKMA, that an authentication architecture of the UE is an AKMA architecture.

16. An authentication method, comprising:
receiving, by a first authentication node, a first request message sent by UE, wherein the first request message comprises first indication information, and the first indication information is used to indicate that the UE comprises a USIM or does not comprise the USIM;
sending, by the first authentication node, a second request message to a second authentication node, wherein the second request message is used to request authentication information from the second authentication node, and the second request message comprises the first indication information;
receiving, by the first authentication node, a first reply message sent by the second authentication node, wherein the first reply message comprises first authentication information or second authentication information, the first authentication information is authentication information for the USIM comprised in the UE, and the second authentication information is authentication information for mobile equipment comprised in the UE when the UE does not comprise the USIM; and
sending, by the first authentication node, a third request message to the UE, wherein the third request message comprises a random number (RAND) and an authentication token (AUTN) in the first authentication information, or a RAND and an AUTN in the second authentication information.

17. The method according to claim 16, wherein the first reply message further comprises second indication information, and the second indication information is used to indicate that the authentication information sent by the second authentication node to the first authentication node is for the USIM or for the mobile equipment.

18. The method according to claim 16 or 17, wherein the first request message further comprises third indication information, and the third indication information is used to indicate an AKMA service.

19. The method according to any one of claims 16 to 18, wherein the second request message further comprises:
a name of a serving network in which the UE is currently located and/or the third indication information.

20. The method according to any one of claims 16 to 19, wherein the method further comprises:
receiving, by the first authentication node, a second reply message sent by the UE, wherein the second reply message comprises a RES;
determining, by the first authentication node based on the RES, that authentication on the UE succeeds, and generating a first AKMA key, wherein the first AKMA key is a key generated by the first authentication node based on the first authentication information or the second authentication information; and
sending, by the first authentication node, fourth indication information and a key lifetime of the first AKMA key to the UE, wherein the fourth indication information is used to indicate a key corresponding to the first AKMA key.

21. The method according to claim 20, wherein the fourth indication information and the key lifetime of the first AKMA key are carried in an authentication success message.

22. The method according to any one of claims 16 to 21, wherein the second request message further comprises an ID of an AKMA AF and/or an authentication token of the AKMA; and the method further comprises:
determining, by the second authentication node based on the ID of the AKMA AF and/or the authentication token of the AKMA, that an authentication architecture of the UE is an AKMA architecture.

23. User equipment, comprising a module configured to perform the method according to any one of claims 1 to 11.

24. An authentication apparatus, comprising a module configured to perform the method according to any one of claims 12 to 15.

25. An authentication apparatus, comprising a module configured to perform the method according to any one of claims 16 to 22.

26. An authentication apparatus, wherein the communication apparatus comprises at least one processor and a communication interface, the communication interface is used by the communication apparatus to exchange information with another communication apparatus; and when program instructions are executed in the at least one processor, the communication apparatus is enabled to implement functions of the method according to any one of claims 1 to 22 on the UE, the first authentication node, or the second authentication node.

27. An authentication system, comprising UE, a first authentication node, and a second authentication node, wherein
the UE is configured to perform the method according to any one of claims 1 to 11;
the first authentication node is configured to perform the method according to any one of claims 16 to 22; and
the second authentication node is configured to perform the method according to any one of claims 12 to 15.

28. A computer program storage medium, wherein the computer program storage medium has program instructions; and when the program instructions are directly or indirectly executed, functions of the method according to any one of claims 1 to 22 on the UE, the first authentication node, and the second authentication node are implemented.

29. A chip system, wherein the chip system comprises at least one processor; and when program instructions are executed in the at least one processor, functions of the method according to any one of claims 1 to 22 on the UE, the first authentication node, and the second authentication node are implemented.
